# EUROPEAN PATENT SPECIFICATION

(11) **EP 4 372 535 B1**
(45) Date of publication and mention of the grant of the patent: **18.03.2026**
(21) Application number: 22860384.1
(22) Date of filing: 18.08.2022
(51) Int. Cl.: G06F 3/0484, H04L 51/18, H04L 51/046

(54) **METHOD FOR TRIGGERING SERVICE EXECUTION, AND ELECTRONIC DEVICE**
VERFAHREN ZUR AUSLÖSUNG EINER DIENSTAUSFÜHRUNG UND ELEKTRONISCHE VORRICHTUNG
PROCÉDÉ DE DÉCLENCHEMENT D'EXÉCUTION DE SERVICE, ET DISPOSITIF ÉLECTRONIQUE

(30) Priority: 24.08.2021 CN 202110974874
(43) Date of publication of application: 22.05.2024
(73) Proprietor: Huawei Technologies Co., Ltd., Shenzhen, Guangdong 518129 (CN)
(72) Inventor: TIAN, Yuanyuan, Shenzhen, Guangdong 518129 (CN); XUE, Rui, Shenzhen, Guangdong 518129 (CN)
(74) Representative: Thun, Clemens
(86) International application number: PCT/CN2022/113392
(87) International publication number: WO 2023/025038

(56) References cited:
- CN-A- 105 915 727
- CN-A- 109 522 543
- US-A1- 2008 189 620
- US-A1- 2016 112 362
- US-A1- 2017 250 936

## Description

### TECHNICAL FIELD

This application relates to the terminal field, and more specifically, to a method for triggering service execution and an electronic device in the terminal field.

### BACKGROUND

With development of mobile internet technologies, instant messaging (instant messaging, IM) has become an indispensable way of communication between people.

When users communicate with each other by using an IM application (application, APP), the user may send execution carriers for various services to a local end or a peer end by using the IM application. The execution carriers may include, for example, an applet, a service account, and a feature ability (feature ability, FA) that may appear in the future.

The applet is used as an example. After the applet is sent to the local end or the peer end, various services of the applet can be used at the local end or the peer end only when the applet is manually triggered at the local end or the peer end.

Document US 2017/250936 A1 discloses techniques for messaging bot rich communication.

Document US 2016/112362 A1 discloses contextual messaging systems and methods implemented through a mobile device.

### SUMMARY

Embodiments of this application provide a method for triggering service execution and an electronic device, wherein the invention is defined by the subject matter of the independent claims and preferred embodiments are subject matter of the dependent claims. According to the method, when a condition for triggering service execution is met, the electronic device can automatically invoke an execution carrier to execute a corresponding service.

According to a first aspect, a method for triggering service execution is provided, and includes: A first client sends an instant messaging message to a server; and the server generates a first scenario message based on the instant messaging message, where the first scenario message includes description information corresponding to a first trigger condition, identification information of an execution carrier for a first service, and parameter information that needs to be invoked when the first service is executed; the server sends the first scenario message or a second scenario message to a second client, where the second scenario message is generated by modifying the first scenario message, and the second scenario message includes description information corresponding to a second trigger condition, identification information of an execution carrier for a second service, and parameter information that needs to be invoked when the second service is executed; and when determining that the first trigger condition is met, the second client invokes, based on the first scenario message, the execution carrier for the first service to execute the first service; or when determining that the second trigger condition is met, the second client invokes, based on the second scenario message, the execution carrier for the second service to execute the second service.

Based on the foregoing technical solution, when the first client sends the instant messaging message to the second client, a server of an instant messaging application generates the first scenario message based on the instant messaging message, and then sends the first scenario message to the second client. The first scenario message includes the first trigger condition, the identification information of the execution carrier for the first service corresponding to the first trigger condition, and the parameter information that needs to be invoked when the first service is executed, so that when the second client determines that the first trigger condition is met, the execution carrier is automatically invoked to execute the first service corresponding to the first trigger condition. Compared with a method of sending the execution carrier for the service to the second client by using the instant messaging message, in this method, a user does not need to manually trigger the execution carrier to execute the corresponding service, but when it is detected that a trigger condition is met, the execution carrier is automatically invoked to execute the corresponding service. This can improve user experience.

With reference to the first aspect, in some implementations of the first aspect, before the server sends the first scenario message to the second client, the method further includes: The server sends the first scenario message to the first client; and the first client displays, based on the first scenario message, a card corresponding to the first scenario message; and if the first client detects an operation of confirming sending of the first scenario message, the first client sends the first scenario message to the server.

Based on the foregoing technical solution, because the first scenario message created based on a voice message is unreliable to some extent, to improve accuracy of the scenario message, after generating the first scenario message, the first server may send the first scenario message to the first client, and the first client displays the first scenario message to the user. In this case, if the user confirms that the first scenario message is correct, the first client may be triggered to send the confirmed first scenario message to the second client via the server. This avoids a situation that the service that is finally executed is not the one requested by the user when the scenario message generated by the server is different from the instant messaging message, and affects user experience.

With reference to the first aspect and the foregoing implementations, in some implementations of the first aspect, after the server sends the first scenario message to the second client, the method further includes: The server determines whether the first trigger condition is met; and the server sends a first message to the second client when determining that the first trigger condition is met, where the first message carries identification information of the first scenario message; and the second client determines, based on the first message, that the first trigger condition is met.

Based on the foregoing technical solution, the server determines whether the first trigger condition is met, and when the first trigger condition is met, sends the first message carrying the identification information of the first scenario message to the second client, and the second client may determine, based on the first message, that the first trigger condition is met.

In addition, in this embodiment of this application, the client that receives the scenario message may also determine whether the first trigger condition is met. For details, refer to related descriptions in the specification.

The server may determine whether the first trigger condition is met, and the client that receives the scenario message may also determine whether the first trigger condition is met. This can improve flexibility of the solution.

With reference to the first aspect and the foregoing implementations, in some implementations of the first aspect, before the server sends the second scenario message to the second client, the method further includes: The server sends the first scenario message to the first client; and the first client displays, based on the first scenario message, a card corresponding to the first scenario message; and if the first client detects an operation of modifying the first scenario message, the first client modifies the first scenario message to generate the second scenario message, and sends the second scenario message to the server when detecting an operation of confirming sending of the second scenario message.

Based on the foregoing technical solution, because the first scenario message created based on a voice message is unreliable to some extent, to improve accuracy of the scenario message, after generating the first scenario message, the first server may send the first scenario message to the first client, and the first client displays the first scenario message to the user. In this case, if the user confirms that the first scenario message is incorrect, the first client may be triggered to modify the first scenario message to generate the second scenario message, and then sends, to the second client via the server, the second scenario message generated by modifying the first scenario message. This avoids a situation that the service that is finally executed is not the one requested by the user when the scenario message generated by the server is different from the instant messaging message, and affects user experience.

With reference to the first aspect and the foregoing implementations, in some implementations of the first aspect, after the server sends the second scenario message to the second client, the method further includes: The server determines whether the second trigger condition is met; and the server sends a second message to the second client when determining that the second trigger condition is met, where the second message carries identification information of the second scenario message; and the second client determines, based on the second message, that the second trigger condition is met.

Based on the foregoing technical solution, the server determines whether the second trigger condition is met, and when the second trigger condition is met, sends the second message carrying the identification information of the second scenario message to the second client, and the second client may determine, based on the second message, that the second trigger condition is met.

In addition, in this embodiment of this application, the client that receives the scenario message may also determine whether the second trigger condition is met. For details, refer to related descriptions in the specification.

The server may determine whether the second trigger condition is met, and the client that receives the scenario message may also determine whether the second trigger condition is met. This can improve flexibility of the solution.

With reference to the first aspect and the foregoing implementations, in some implementations of the first aspect, the instant messaging message is a text message or a voice message.

It should be noted that a type of the instant messaging message is not limited in this embodiment of this application, and any instant messaging message that can meet generation of a scenario message falls within the protection scope of this embodiment of this application.

With reference to the first aspect and the foregoing implementations, in some implementations of the first aspect, the first client and the second client are a same client.

It should be noted that the method for triggering service execution provided in this embodiment of this application is applicable to a scenario in which one client sends the instant messaging message to another client. In addition, the method is also applicable to a scenario in which the client sends the instant messaging message to the client.

According to a second aspect, a method for triggering service execution is provided, where the method is performed by a server, and includes: The server receives an instant messaging message, where the instant messaging message is sent by a first client to the server; the server generates a first scenario message based on the instant messaging message, where the first scenario message includes description information corresponding to a first trigger condition, identification information of an execution carrier for a first service, and parameter information that needs to be invoked when the first service is executed; and the server sends the first scenario message or a second scenario message to a second client, where the second scenario message is generated by modifying the first scenario message, and the second scenario message includes description information corresponding to a second trigger condition, identification information of an execution carrier for a second service, and parameter information that needs to be invoked when the second service is executed.

Based on the foregoing technical solution, when the first client sends the instant messaging message to the second client, a server of an instant messaging application generates the first scenario message based on the instant messaging message, and then sends the first scenario message to the second client. The first scenario message includes the first trigger condition, the identification information of the execution carrier for the first service corresponding to the first trigger condition, and the parameter information that needs to be invoked when the first service is executed, so that when the second client determines that the first trigger condition is met, the execution carrier is automatically invoked to execute the first service corresponding to the first trigger condition. Compared with a method of sending the execution carrier for the service to the second client by using the instant messaging message, in this method, a user does not need to manually trigger the execution carrier to execute the corresponding service, but when it is detected that a trigger condition is met, the execution carrier is automatically invoked to execute the corresponding service. This can improve user experience.

With reference to the second aspect, in some implementations of the second aspect, before the server sends the first scenario message to the second client, the method further includes: The server sends the first scenario message to the first client; and the server receives the first scenario message from the first client.

Based on the foregoing technical solution, because the first scenario message created based on a voice message is unreliable to some extent, to improve accuracy of the scenario message, after generating the first scenario message, the first server may send the first scenario message to the first client, and the first client displays the first scenario message to the user. In this case, if the user confirms that the first scenario message is correct, the first client may be triggered to send the confirmed first scenario message to the second client via the server. This avoids a situation that the service that is finally executed is not the one requested by the user when the scenario message generated by the server is different from the instant messaging message, and affects user experience.

With reference to the second aspect and the foregoing implementations, in some implementations of the second aspect, after the server sends the first scenario message to the second client, the method further includes: The server determines whether the first trigger condition is met; and the server sends a first message to the second client when determining that the first trigger condition is met, where the first message carries identification information of the first scenario message.

Based on the foregoing technical solution, the server determines whether the first trigger condition is met, and when the first trigger condition is met, sends the first message carrying the identification information of the first scenario message to the second client, and the second client may determine, based on the first message, that the first trigger condition is met.

In addition, in this embodiment of this application, the client that receives the scenario message may also determine whether the first trigger condition is met. For details, refer to related descriptions in the specification.

The server may determine whether the first trigger condition is met, and the client that receives the scenario message may also determine whether the first trigger condition is met. This can improve flexibility of the solution.

With reference to the second aspect and the foregoing implementations, in some implementations of the second aspect, before the server sends the second scenario message to the second client, the method further includes: The server sends the first scenario message to the first client; and the server receives the second scenario message from the second client.

Based on the foregoing technical solution, because the first scenario message created based on a voice message is unreliable to some extent, to improve accuracy of the scenario message, after generating the first scenario message, the first server may send the first scenario message to the first client, and the first client displays the first scenario message to the user. In this case, if the user confirms that the first scenario message is incorrect, the first client may be triggered to modify the first scenario message to generate the second scenario message, and then sends, to the second client via the server, the second scenario message generated by modifying the first scenario message. This avoids a situation that the service that is finally executed is not the one requested by the user when the scenario message generated by the server is different from the instant messaging message, and affects user experience.

With reference to the second aspect and the foregoing implementations, in some implementations of the second aspect, after the server sends the second scenario message to the second client, the method further includes: The server determines whether the second trigger condition is met; and the server sends a second message to the second client when determining that the second trigger condition is met, where the second message carries identification information of the second scenario message.

Based on the foregoing technical solution, the server determines whether the second trigger condition is met, and when the second trigger condition is met, sends the second message carrying the identification information of the second scenario message to the second client, and the second client may determine, based on the second message, that the second trigger condition is met.

In addition, in this embodiment of this application, the client that receives the scenario message may also determine whether the second trigger condition is met. For details, refer to related descriptions in the specification.

The server may determine whether the second trigger condition is met, and the client that receives the scenario message may also determine whether the second trigger condition is met. This can improve flexibility of the solution.

With reference to the second aspect and the foregoing implementations, in some implementations of the second aspect, the first client and the second client are a same client.

It should be noted that the method for triggering service execution provided in this embodiment of this application is applicable to a scenario in which one client sends the instant messaging message to another client. In addition, the method is also applicable to a scenario in which the client sends the instant messaging message to the client.

With reference to the second aspect and the foregoing implementations, in some implementations of the second aspect, the IM message is a text message or a voice message.

It should be noted that a type of the instant messaging message is not limited in this embodiment of this application, and any instant messaging message that can meet generation of a scenario message falls within the protection scope of this embodiment of this application.

According to a third aspect, a method for triggering service execution is provided, where the method is performed by a client, and includes: The client sends an instant messaging message to a server; the client receives a first scenario message or a second scenario message from the server, where the first scenario message is generated based on the instant messaging message, the first scenario message includes description information corresponding to a first trigger condition, identification information of an execution carrier for a first service, and parameter information that needs to be invoked when the first service is executed, the second scenario message is generated by the client by modifying the first scenario message after the client receives the first scenario message for the first time, and the second scenario message includes description information corresponding to a second trigger condition, identification information of an execution carrier for a second service, and parameter information that needs to be invoked when the second service is executed; and when determining that the first trigger condition is met, the client invokes, based on the first scenario message, the execution carrier for the first service to execute the first service; or when determining that the second trigger condition is met, the client invokes, based on the second scenario message, the execution carrier for the second service to execute the second service.

When the client sends the instant messaging message to the client or another client, a server of an instant messaging message application generates the first scenario message based on the instant messaging message, and sends the first scenario message to the client or the another client. The first scenario message includes the first trigger condition, the identification information of the execution carrier for the first service corresponding to the first trigger condition, and the parameter information that needs to be invoked when the first service is executed, so that when a receive end of the first scenario message determines that the first trigger condition is met, the execution carrier is automatically invoked to execute the service corresponding to the first trigger condition. Compared with a method of sending the execution carrier for the service to the second client by using the instant messaging message, in this method, a user does not need to manually trigger the execution carrier to execute the corresponding service, but when it is detected that a trigger condition is met, the execution carrier is automatically invoked to execute the corresponding service. This can improve user experience.

With reference to the third aspect, in some implementations of the third aspect, after the client receives the first scenario message for the first time, the method further includes: displaying, based on the first scenario message, a card corresponding to the first scenario message; and if an operation of confirming sending of the first scenario message is detected, sending the first scenario message to the server.

Based on the foregoing technical solution, because the first scenario message created based on a voice message is unreliable to some extent, to improve accuracy of the scenario message, after generating the first scenario message, the first server may send the first scenario message to the client, and the client displays the first scenario message to the user. In this case, if the user confirms that the first scenario message is correct, the client may be triggered to send the confirmed first scenario message to the client or the another client via the server. This avoids a situation that the service that is finally executed is not the one requested by the user when the scenario message generated by the server is different from the instant messaging message, and affects user experience.

With reference to the third aspect and the foregoing implementations, in some implementations of the third aspect, the method further includes: receiving a first message from the server, where the first message carries identification information of the first scenario message; and determining, based on the first message, that the first trigger condition is met.

Based on the foregoing technical solution, the server determines whether the first trigger condition is met, and when the first trigger condition is met, sends the first message carrying the identification information of the first scenario message to the client or another client, and the client or the another client may determine, based on the first message, that the first trigger condition is met.

In addition, in this embodiment of this application, the client that receives the scenario message may also determine whether the first trigger condition is met. For details, refer to related descriptions in the specification.

The server may determine whether the first trigger condition is met, and the client that receives the scenario message may also determine whether the first trigger condition is met. This can improve flexibility of the solution.

With reference to the third aspect and the foregoing implementations, in some implementations of the third aspect, after the client receives the first scenario message for the first time, the method further includes: displaying, based on the first scenario message, a card corresponding to the first scenario message; and if an operation of modifying the first scenario message is detected, modifying the first scenario message to generate the second scenario message, and sending the second scenario message to the server when an operation of confirming sending of the second scenario message is detected.

Based on the foregoing technical solution, because the first scenario message created based on a voice message is unreliable to some extent, to improve accuracy of the scenario message, after generating the first scenario message, the first server may send the first scenario message to the client, and the client displays the first scenario message to the user. In this case, if the user confirms that the first scenario message is incorrect, the client may be triggered to modify the first scenario message to generate the second scenario message, and then the client is triggered to send, to the client or another client via the server, the second scenario message generated by modifying the first scenario message. This avoids a situation that the service that is finally executed is not the one requested by the user when the scenario message generated by the server is different from the instant messaging message, and affects user experience.

With reference to the third aspect and the foregoing implementations, in some implementations of the third aspect, the method further includes: receiving a second message from the server, where the second message carries identification information of the second scenario message; and determining, based on the second message, that the second trigger condition is met.

Based on the foregoing technical solution, the server determines whether the second trigger condition is met, and when the second trigger condition is met, sends the second message carrying the identification information of the second scenario message to the client or another client, and the client or the another client may determine, based on the second message, that the second trigger condition is met.

In addition, in this embodiment of this application, the client that receives the scenario message may also determine whether the second trigger condition is met. For details, refer to related descriptions in the specification.

The server may determine whether the second trigger condition is met, and the client that receives the scenario message may also determine whether the second trigger condition is met. This can improve flexibility of the solution.

With reference to the third aspect and the foregoing implementations, in some implementations of the third aspect, the IM message is a text message or a voice message.

It should be noted that a type of the instant messaging message is not limited in this embodiment of this application, and any instant messaging message that can meet generation of a scenario message falls within the protection scope of this embodiment of this application.

According to a fourth aspect, a method for triggering service execution is provided, where the method includes: A first client sends an instant messaging message to a first server; the first server generates a first scenario message based on the instant messaging message, where the first scenario message includes description information corresponding to a first trigger condition, identification information of an execution carrier for a first service, and parameter information that needs to be invoked when the first service is executed; the first server sends the first scenario message or a second scenario message to a second server, where the second scenario message is generated by modifying the first scenario message, and the second scenario message includes description information corresponding to a second trigger condition, identification information of an execution carrier for a second service, and parameter information that needs to be invoked when the second service is executed; the second server sends the first scenario message or the second scenario message to a second client; and when determining that the first trigger condition is met, the second client invokes, based on the first scenario message, the execution carrier for the first service to execute the first service, or when determining that the second trigger condition is met, the second client invokes, based on the second scenario message, the execution carrier for the second service to execute the second service.

Based on the foregoing technical solution, when the first client sends the instant messaging message to the second client, a server of an instant messaging application generates the first scenario message based on the instant messaging message, and then sends the first scenario message to the second client via the second server. The first scenario message includes the first trigger condition, the identification information of the execution carrier for the first service corresponding to the first trigger condition, and the parameter information that needs to be invoked when the first service is executed, so that when the second client determines that the first trigger condition is met, the execution carrier is automatically invoked to execute the first service corresponding to the first trigger condition. Compared with a method of sending the execution carrier for the service to the second client by using the instant messaging message, in this method, a user does not need to manually trigger the execution carrier to execute the corresponding service, but when it is detected that a trigger condition is met, the execution carrier is automatically invoked to execute the corresponding service. This can improve user experience.

For example, the second client may be an IoT device.

With reference to the fourth aspect, in some implementations of the fourth aspect, before the first server sends the first scenario message to the second server, the method further includes: The first server sends the first scenario message to the first client; and the first client displays, based on the first scenario message, a card corresponding to the first scenario message; and if the first client detects an operation of confirming sending of the first scenario message, the first client sends the first scenario message to the first server.

Based on the foregoing technical solution, because the first scenario message created based on a voice message is unreliable to some extent, to improve accuracy of the scenario message, after generating the first scenario message, the first server may send the first scenario message to the first client, and the first client displays the first scenario message to the user. In this case, if the user confirms that the first scenario message is correct, the first client may be triggered to send the confirmed first scenario message to the second client via the first server. This avoids a situation that the service that is finally executed is not the one requested by the user when the scenario message generated by the server is different from the instant messaging message, and affects user experience.

With reference to the fourth aspect and the foregoing implementations, in some implementations of the fourth aspect, after the first server sends the first scenario message to the second server, the method further includes: The first server determines whether the first trigger condition is met; and when determining that the first trigger condition is met, the first server sends a first message to the second client via the second server, where the first message carries identification information of the first scenario message; and the second client determines, based on the first message, that the first trigger condition is met.

Based on the foregoing technical solution, the first server determines whether the first trigger condition is met, and when the first trigger condition is met, sends, to the second client via the second server, the first message carrying the identification information of the first scenario message, and the second client may determine, based on the first message, that the first trigger condition is met.

In addition, in this embodiment of this application, the second client may also determine whether the first trigger condition is met. For details, refer to related descriptions in the specification.

The first server may determine whether the first trigger condition is met, and the client that receives the scenario message may also determine whether the first trigger condition is met. This can improve flexibility of the solution.

With reference to the fourth aspect and the foregoing implementations, in some implementations of the fourth aspect, after the second server sends the first scenario message to the second client, the method further includes: The second server determines whether the first trigger condition is met; and the second server sends a first message to the second client when determining that the first trigger condition is met, where the first message carries identification information of the first scenario message; and the second client determines, based on the first message, that the first trigger condition is met.

Based on the foregoing technical solution, the second server determines whether the first trigger condition is met, and when the first trigger condition is met, sends the first message carrying the identification information of the first scenario message to the second client, and the second client may determine, based on the first message, that the first trigger condition is met.

In addition, in this embodiment of this application, the second client may also determine whether the first trigger condition is met. For details, refer to related descriptions in the specification.

The second server may determine whether the first trigger condition is met, and the client that receives the scenario message may also determine whether the first trigger condition is met. This can improve flexibility of the solution.

With reference to the fourth aspect and the foregoing implementations, in some implementations of the fourth aspect, before the first server sends the second scenario message to the second client, the method further includes: The first server sends the first scenario message to the first client; and the first client displays, based on the first scenario message, a card corresponding to the first scenario message; and if the first client detects an operation of modifying the first scenario message, the first client modifies the first scenario message to generate the second scenario message, and sends the second scenario message to the server when detecting an operation of confirming sending of the second scenario message.

Based on the foregoing technical solution, because the first scenario message created based on a voice message is unreliable to some extent, to improve accuracy of the scenario message, after generating the first scenario message, the first server may send the first scenario message to the first client, and the first client displays the first scenario message to the user. In this case, if the user confirms that the first scenario message is incorrect, the first client may be triggered to modify the first scenario message to generate the second scenario message, and then the first server is triggered by the first client to send, to the second client, the second scenario message generated by modifying the first scenario message. This avoids a situation that the service that is finally executed is not the one requested by the user when the scenario message generated by the server is different from the instant messaging message, and affects user experience.

With reference to the fourth aspect and the foregoing implementations, in some implementations of the fourth aspect, after the first server sends the second scenario message to the second server, the method further includes: The first server determines whether the second trigger condition is met; and when determining that the second trigger condition is met, the first server sends a second message to the second client via the second server, where the second message carries identification information of the second scenario message; and the second client determines, based on the second message, that the second trigger condition is met.

Based on the foregoing technical solution, the first server determines whether the second trigger condition is met, and when the second trigger condition is met, sends the second message carrying the identification information of the second scenario message to the second client, and the second client may determine, based on the second message, that the second trigger condition is met.

In addition, in this embodiment of this application, the second client may also determine whether the second trigger condition is met. For details, refer to related descriptions in the specification.

The first server may determine whether the second trigger condition is met, and the client that receives the scenario message may also determine whether the second trigger condition is met. This can improve flexibility of the solution.

With reference to the fourth aspect and the foregoing implementations, in some implementations of the fourth aspect, after the second server sends the second scenario message to the second client, the method further includes: The second server determines whether the second trigger condition is met; and the second server sends a second message to the second client when determining that the second trigger condition is met, where the second message carries identification information of the second scenario message; and the second client determines, based on the second message, that the second trigger condition is met.

Based on the foregoing technical solution, the second server determines whether the second trigger condition is met, and when the second trigger condition is met, sends the second message carrying the identification information of the second scenario message to the second client, and the second client may determine, based on the second message, that the second trigger condition is met.

In addition, in this embodiment of this application, the second client may also determine whether the second trigger condition is met. For details, refer to related descriptions in the specification.

The second server may determine whether the second trigger condition is met, and the client that receives the scenario message may also determine whether the second trigger condition is met. This can improve flexibility of the solution.

According to a fifth aspect, this application provides an apparatus. The apparatus is included in an electronic device, and the apparatus has a function of implementing behavior of the electronic device in the foregoing aspects and the possible implementations of the foregoing aspects. The function may be implemented by hardware, or may be implemented by hardware by executing corresponding software. The hardware or the software includes one or more modules or units corresponding to the foregoing functions.

According to a sixth aspect, this application provides an electronic device, including one or more processors, a memory, and one or more computer programs. The one or more computer programs are stored in the memory, and the one or more computer programs include instructions. When the instructions are executed by the electronic device, the electronic device is enabled to perform the method for triggering service execution according to any possible implementation of any foregoing aspect.

According to a seventh aspect, this application provides an electronic device, including one or more processors and one or more memories. The one or more memories are coupled to the one or more processors. The one or more memories are configured to store computer program code, the computer program code includes computer instructions, and when the one or more processors execute the computer instructions, the electronic device performs the method for triggering service execution according to any possible implementation of any one of the foregoing aspects.

According to an eighth aspect, this application provides a computer-readable storage medium, including computer instructions. When the computer instructions are run on an electronic device, the electronic device is enabled to perform the video playback method according to any possible implementation of any one of the foregoing aspects.

According to a ninth aspect, this application provides a computer program product. When the computer program product runs on an electronic device, the electronic device performs the method for triggering service execution according to any possible implementation of any one of the foregoing aspects.

### BRIEF DESCRIPTION OF DRAWINGS

FIG. 1 is a schematic diagram of a structure of an example of an electronic device according to an embodiment of this application;
FIG. 2 is a schematic diagram of a structure of another example of an electronic device according to an embodiment of this application;
FIG. 3 is a schematic flowchart of an example of a method for triggering service execution according to an embodiment of this application;
FIG. 4(a) to FIG. 4(e) are schematic diagrams of an example of a graphical user interface for triggering service execution according to an embodiment of this application;
FIG. 5 is a schematic flowchart of another example of a method for triggering service execution according to an embodiment of this application;
FIG. 6(a) to FIG. 6(f) are schematic diagrams of another example of a graphical user interface for triggering service execution according to an embodiment of this application;
FIG. 7 is a schematic flowchart of still another example of a method for triggering service execution according to an embodiment of this application;
FIG. 8(a) to FIG. 8(d) are schematic diagrams of still another example of a graphical user interface for triggering service execution according to an embodiment of this application;
FIG. 9 is a schematic flowchart of yet another example of a method for triggering service execution according to an embodiment of this application; and
FIG. 10(a) to FIG. 10(d) are schematic diagrams of yet another example of a graphical user interface for triggering service execution according to an embodiment of this application.

### DESCRIPTION OF EMBODIMENTS

The following describes technical solutions of embodiments in this application with reference to the accompanying drawings.

The method for triggering service execution provided in embodiments of this application is applied to a client that can receive and/or send an IM message, such as a mobile phone, an internet of things (internet of things, IoT) device, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the client is not limited in embodiments of this application.

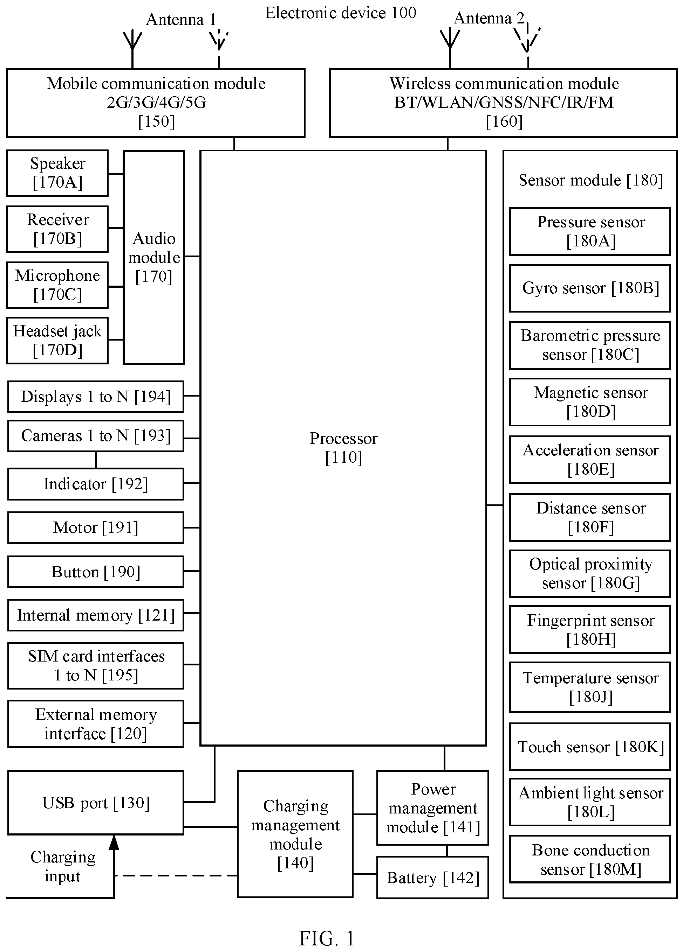

For example, FIG. 1 is a schematic diagram of a structure of an example of an electronic device 100 according to an embodiment of this application. The electronic device 100 corresponds to a client, and includes a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be disposed in the processor 110, and is configured to store instructions and data. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronous serial bus. The processor 110 may be coupled to the touch sensor 180K through the I2C interface, so that the processor 110 communicates with the touch sensor 180K through the I2C bus interface, to implement a touch function of the electronic device 100. The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

It may be understood that an interface connection relationship between the modules shown in this embodiment of this application is only an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, a touch sensor, the video codec, the GPU, the display 194, the application processor and the like, for example, a process for triggering service execution described in this embodiment of this application.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. It should be understood that, in descriptions of this embodiment of this application, an image in an RGB format is used as an example for description, and an image format is not limited in this embodiment of this application. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG) 1, MPEG 2, MPEG 3, and MPEG 4.

The external memory interface 120 may be configured to connect to an external memory card, for example, a micro SD card, to extend a storage capability of the electronic device 100. The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area.

The electronic device 100 may implement an audio function, for example, music playing and recording, through the audio module 170, the speaker 170A, the receiver 170B, the microphone 170C, the headset jack 170D, the application processor, for example, the audio function includes music playing, recording, and the like.

The pressure sensor 180A is configured to sense a pressure signal, and can convert the pressure signal into an electrical signal. The gyro sensor 180B may be configured to determine a moving posture of the electronic device 100. The barometric pressure sensor 180C is configured to measure barometric pressure. The magnetic sensor 180D includes a Hall sensor. The electronic device 100 may detect opening and closing of a flip cover by using the magnetic sensor 180D. The acceleration sensor 180E may detect accelerations in various directions (usually on three axes) of the electronic device 100. The distance sensor 180F is configured to measure a distance. The electronic device 100 may measure the distance in an infrared manner or a laser manner. In some embodiments, in a photographing scene, the electronic device 100 may measure a distance by using the distance sensor 180F to implement quick focusing. The optical proximity sensor 180G may include, for example, a light emitting diode (LED) and an optical detector, for example, a photodiode. The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature. The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The bone conduction sensor 180M may obtain a vibration signal. The audio module 170 may obtain a voice signal through parsing based on the vibration signal that is of the vibration bone of the vocal-cord part and that is obtained by the bone conduction sensor 180M, to implement a voice function.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. The indicator 192 may be an indicator light, and may be configured to indicate a charging status and a power change, or may be configured to indicate a message, a missed call, a notification, and the like. The SIM card interface 195 is configured to connect to a SIM card.

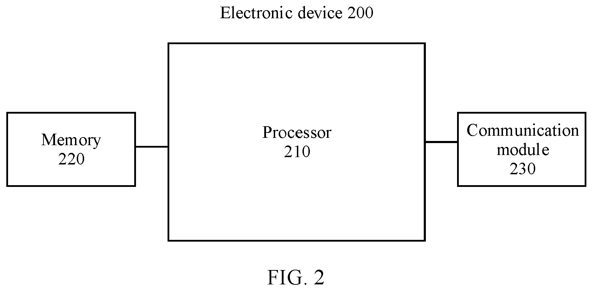

FIG. 2 is a schematic diagram of a structure of another example of an electronic device 200 according to an embodiment of this application. The electronic device 200 corresponds to a server, and may include a processor 210, a memory 220, a communication module 230, and the like. It should be noted that the server serves the client, provides resources for the client, and stores client data.

The processor 210 may include one or more processing units, and the memory 220 is configured to store program code and data. In this embodiment of this application, the processor 210 may execute computer-executable instructions stored in the memory 220, and the processor 210 is configured to control and manage an action of the electronic device 200.

The communication module 230 may be configured to: perform communication between internal modules of the electronic device 200, or perform communication between the electronic device 200 and another external electronic device, or the like.

It should be understood that, in addition to various components or modules shown in FIG. 2, the structure of the electronic device 200 is not specifically limited in this embodiment of this application. In some other embodiments of this application, the electronic device 200 may further include more or fewer components than those shown in the figure, or a combination of a part of the components, or splits from a part of the components, or an arrangement of different components. The components shown in the figure may be implemented by hardware, software, or a combination of software and hardware.

According to a method for triggering service execution provided in this embodiment of this application, when a client sends an IM message to the client or another client, a server (hereinafter referred to as a "first server") of an IM application generates a scenario message based on the IM message, and sends the scenario message to a receive end of the scenario message. The scenario message includes a trigger condition, identification information of an execution carrier for a service corresponding to the trigger condition, and parameter information that needs to be invoked when the service is executed, so that when the receive end of the scenario message determines that the trigger condition is met, the execution carrier is automatically invoked to execute the service corresponding to the trigger condition.

The following briefly describes the scenario message. The scenario message may generally include the following fields:
length: total length of the scenario message;
version: version number of a protocol corresponding to a format of the scenario message;
msgType: service type, indicating that the scenario message is a self-sending and self-receiving message, a one-to-one chat message, or a device humanization message;
messageId: identification information of the scenario message, used to identify the scenario message;
traceId: tracing ID, used to trace the scenario message and locate a fault when the fault occurs;
fromDevInfo: subscriber identifier and device identifier that are of a sender of the scenario message;
toDevInfo: subscriber identifier and device identifier that are of a recipient of the scenario message;
displayMsg: text displayed to a user;
triggerCondition: trigger condition, namely, a condition for triggering service execution; and
triggerType: trigger type, which can be one of a trigger on a device side, a trigger on a cloud side, or a trigger on device-cloud combination.

The following describes the trigger types in different cases.

Case 1: The receive end of the scenario message is a client on which the IM application is installed.

The trigger on the device side means that the receive end of the scenario message determines whether a condition for triggering service execution is met. For example, the condition for triggering service execution is arrival at ** position. In this case, the receive end of the scenario message may determine whether the condition for triggering service execution is met. In this case, the trigger type is the trigger on the device side.

The trigger on the cloud side means that the first server determines whether a condition for triggering service execution is met. For example, the condition for triggering service execution is a typhoon warning. In this case, the first server may determine whether the condition for triggering service execution is met. In this case, the trigger type is the trigger on the cloud side.

The trigger on device-cloud combination means determining whether a condition for triggering service execution is met, and both the first server and a receive end of the scenario message need to participate. For example, the condition for triggering service execution is snow in ** city. In this case, the client may determine whether a position meets the condition for triggering service execution, and the first server determines whether weather meets the condition for triggering service execution. In this case, the trigger type is the trigger on device-cloud combination.

Case 2: The receive end of the scenario message is an IoT device, and the IoT device does not have a capability of determining whether a condition for triggering service execution is met.

The trigger on the device side means that a server of the IoT device, namely, a second server, determines whether a condition for triggering service execution is met. For example, the IoT device is a smart water heater, and the condition for triggering service execution is whether a current moment is a moment set by a user. In this case, the second server may determine whether the condition for triggering service execution is met. In this case, the trigger type is the trigger on the device side.

The trigger on the cloud side means that the first server determines whether a condition for triggering service execution is met. For example, the condition for triggering service execution is that the temperature rises sharply. In this case, the first server may determine whether the condition for triggering service execution is met. In this case, the trigger type is the trigger on the cloud side.

The trigger on device-cloud combination means determining whether a condition for triggering service execution is met, and both the first server and the second server need to participate. For example, the IoT device is a smart refrigerator, and the condition for triggering service execution is as follows: In high-temperature weather, when there is no fruit in the refrigerator, a user is reminded to buy fruits. In this case, the first server may determine whether the weather meets the condition for triggering service execution, and the second server determines whether a status of the fruit fresh-keeping area meets the condition for triggering service execution. In this case, the trigger type is the trigger on device-cloud combination.

Case 3: The receive end of the scenario message is an IoT device, and the IoT device has a capability of determining whether a condition for triggering service execution is met.

The trigger on the device side means that the IoT device determines whether a condition for triggering service execution is met. For example, the condition for triggering service execution is that a position of the IoT device changes. In this case, the IoT device may determine whether the condition for triggering service execution is met. In this case, the trigger type is the trigger on the device side.

The trigger on the cloud side means that the first server determines whether a condition for triggering service execution is met. For example, the condition for triggering service execution is that the temperature drops sharply. In this case, the first server may determine whether the condition for triggering service execution is met. In this case, the trigger type is the trigger on the cloud side.

The trigger on device-cloud combination means determining whether a condition for triggering service execution is met, and both the first server and the IoT device need to participate. For example, the IoT device is a smart refrigerator, and the condition for triggering service execution is as follows: In high-temperature weather, when there is no fruit in the refrigerator, a user is reminded to buy fruits. In this case, the first server may determine whether the weather meets the condition for triggering service execution, and the IoT device determines whether a status of the fruit fresh-keeping area meets the condition for triggering service execution. In this case, the trigger type is the trigger on device-cloud combination.

In addition, the scenario message further includes the following fields:
serviceId: identification information of an execution carrier, which may be associated with a specific execution carrier based on the identification information of the execution carrier; and
serviceOpt: parameter to be invoked during service execution.

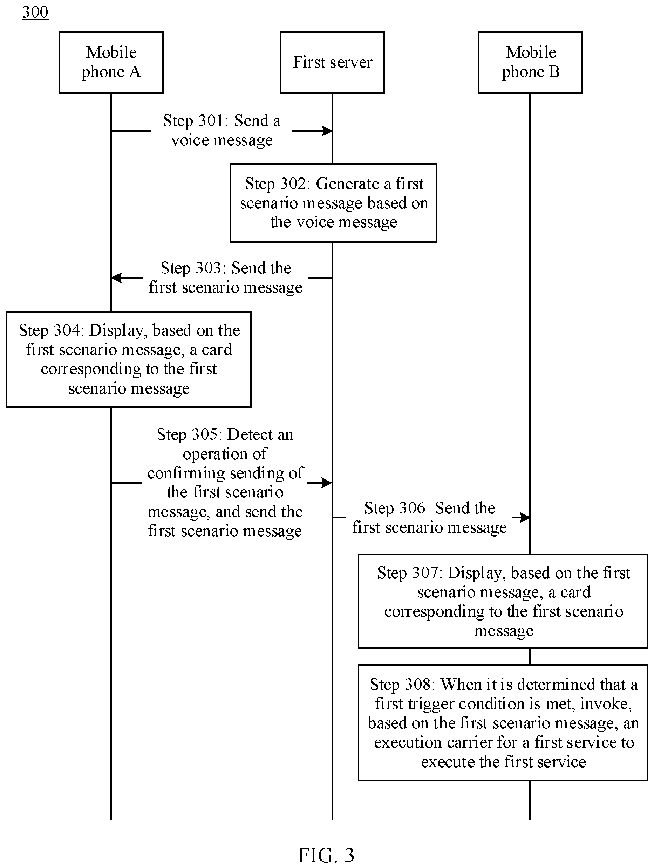

The following describes an example of a method for triggering service execution according to an embodiment of this application by using an example in which a first client sends an IM message to a second client, a trigger type is the trigger on the device side in Case 1, and both the first client and the second client are mobile phones. FIG. 3 is a schematic flowchart of a method 300 for triggering service execution.

Step 301: A mobile phone A sends a voice message to a mobile phone B via a first server. The mobile phone A corresponds to the first client, the mobile phone B corresponds to the second client, and the voice message corresponds to the IM message.

In some embodiments, the IM message may alternatively be a text message. A type of the IM message is not limited in this application.

It is assumed that an IM application is installed on each of the mobile phone A and the mobile phone B, and a user of the mobile phone A may send a voice message to a user of the mobile phone B by using the IM application. For ease of description, the user of the mobile phone A is referred to as a user A, and the user of the mobile phone B is referred to as a user B.

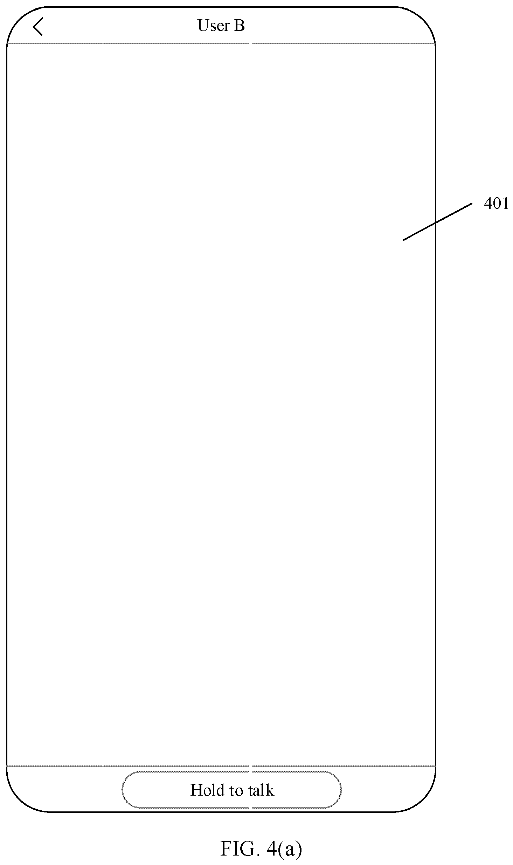

For example, on the mobile phone A, a message interface that is between the user A and the user B and that is in the IM application is an interface 401 shown in FIG. 4(a). The user A may touch and hold a "Hold to talk" button, and send, to the user B, a voice message of "reserving a special vehicle to a company after arriving at an airport".

Step 302: The first server generates a first scenario message based on the voice message, where the first scenario message includes description information corresponding to a first trigger condition, identification information of an execution carrier for a first service, and parameter information that needs to be invoked when the first service is executed.

When the IM application on the mobile phone A sends the voice message to the IM application on the mobile phone B via the first server, the voice message first arrives at the first server, and the first server generates the first scenario message based on the voice message.

The first server may first convert, by using an automatic speech recognition (automatic speech recognition, ASR) technology, a voice from the user A into a text of "reserving a special vehicle to a company after arriving at an airport", and then recognize, from the text by using a natural language processing (natural language processing, NLP) technology, that the first trigger condition is " arriving at the airport", and the first service is "reserving a special vehicle to the company".

To generate the first scenario message, the first server further needs to obtain specific coordinates of the airport and the company. For example, the first server may determine the specific coordinates of the airport and the company based on positions that are of the airport and the company and that are set by the user A. For example, the user A may set the positions of the airport and the company by using the IM application. For example, the position of the airport may be set to: Xi'an Xianyang International Airport T2 terminal, and the position of the company may be set to: South gate, Xi'an ** Technology Co., Ltd., the positions and specific coordinates of the airport and the company are synchronized to the first server, and the first server obtains the specific coordinates of the airport and the company.

The first server further needs to associate, for the first service, a carrier that can execute the first service. For example, the execution carrier associated by the first server for the first service is a "** taxi hailing" applet.

In some embodiments, the first server may further determine a trigger type. For example, a correspondence between a trigger condition and a trigger type is configured for the first server. The first server may determine, based on the correspondence between the trigger condition and the trigger type, a trigger type corresponding to the first trigger condition. For example, the correspondence indicates that a trigger type corresponding to "arriving at the airport" is the trigger on the device side. In this case, the first server may determine, based on the correspondence and the first trigger condition, that the trigger type corresponding to the first trigger condition is the trigger on the device side.

Then, the first server may generate the first scenario message. For example, the first scenario message may include the following fields:
displayMsg: "Reserve a special vehicle to a company after arriving at an airport";
triggerCondition: {"conditionType": "GET_POSITION", "position": "{airport: Xi'an Xianyang International Airport T2 Terminal, specific coordinates: xxx}"};
triggerType: trigger on the device side;
serviceId: ID of the "** taxi hailing" applet; and
serviceOpt: {"fromPosition": "{airport: Xi'an Xianyang International Airport T2 Terminal, specific coordinates: xxx}", "toPosition": "{ company: South gate, Xi'an ** Technology Co., Ltd., specific coordinates: xxx}", operation: "TAKE_TAXI"}.

Content of triggerCondition corresponds to the description information corresponding to the first trigger condition, content of serviceId corresponds to the identification information of the execution carrier for the first service, content of triggerType corresponds to the trigger type, and content of serviceOpt corresponds to the parameter information that needs to be invoked when the first service is executed.

Step 303: The first server sends the first scenario message to the mobile phone A.

Step 304: The mobile phone A displays, based on the first scenario message, a card corresponding to the first scenario message.

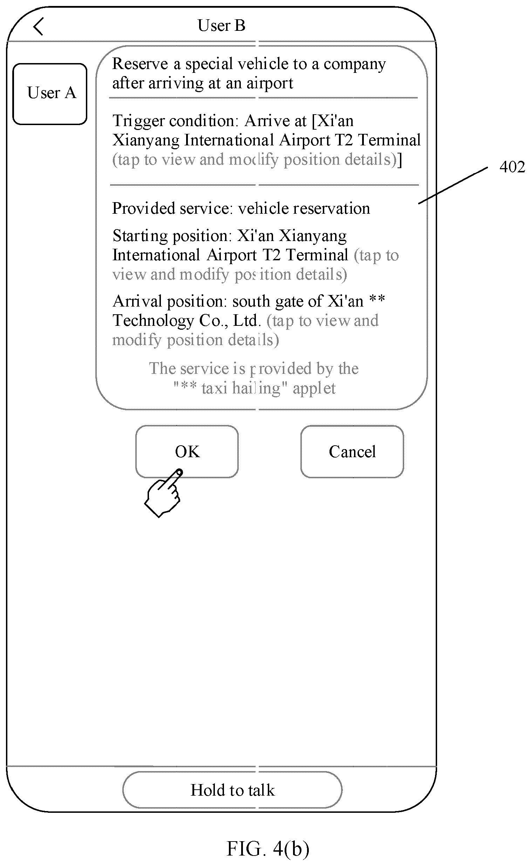

Because the first scenario message created based on the voice message is unreliable to some extent, after generating the first scenario message, the first server may send the first scenario message to the IM application on the mobile phone A. After receiving the first scenario message, the IM application on the mobile phone A may display the first scenario message to the user A, so that the user A confirms the first scenario message. For example, the IM application on the mobile phone A may trigger the mobile phone A to display the card corresponding to the first scenario message, in this case, a display interface 402 of the mobile phone A may be shown in FIG. 4(b).

In some embodiments, the user A may determine, based on information displayed in the card, whether a trigger condition, a starting position, or a destination position in the card needs to be modified. It should be noted that the trigger condition in FIG. 4(b) to FIG. 4(d) corresponds to the first trigger condition.

When modification is not required, and the user A determines to send the first scenario message, the user A may tap an "OK" button to trigger the mobile phone A to send the first scenario message. When modification is required, the user A may modify corresponding information by using a modification entrance. For example, if the user A wants to modify the starting position, the user A may modify the starting position by tapping a "tap to view and modify position details" button, and the "tap to view and modify position details" button is a modification entrance.

It should be noted that, if the card in the interface 402 does not provide a modification entrance, the user A may tap a "Cancel" button to cancel sending of the first scenario message and then resend the voice message, to modify information that needs to be modified. In addition, regardless of whether the user A needs to modify information displayed in the card, the user A may tap a "Cancel" button at any time to cancel sending of the scenario message.

Step 305: The mobile phone A detects an operation of confirming sending of the first scenario message, and sends the first scenario message to the mobile phone B via the first server.

In some embodiments, the user A taps an "OK" button in FIG. 4(b), and the IM application on the mobile phone A sends, in response to the operation, the first scenario message to the IM application on the mobile phone B via the first server.

Step 306: The first server sends the first scenario message to the mobile phone B.

As described in step 302, the first scenario message sent by the IM application on the mobile phone A to the IM application on the mobile phone B via the first server first arrives at the first server, and then the first server forwards the first scenario message to the IM application on the mobile phone B.

Step 307: The mobile phone B displays, based on the first scenario message, a card corresponding to the first scenario message.

After receiving the first scenario message, the IM application on the mobile phone B may determine, based on a triggerType field in the first scenario message, that the trigger type is the trigger on the device side, that is, the mobile phone B determines whether the first trigger condition is met. When it is determined whether the first trigger condition is met, the IM application on the mobile phone B may register triggerCondition: {"conditionType": "GET_POSITION", "position": "{airport: Xi'an Xianyang International Airport T2 terminal, specific coordinates: xxx}"} in the first scenario message with an engine that is in the mobile phone B and that is used to determine whether the trigger condition is met, to determine, through the engine, whether the first trigger condition is met.

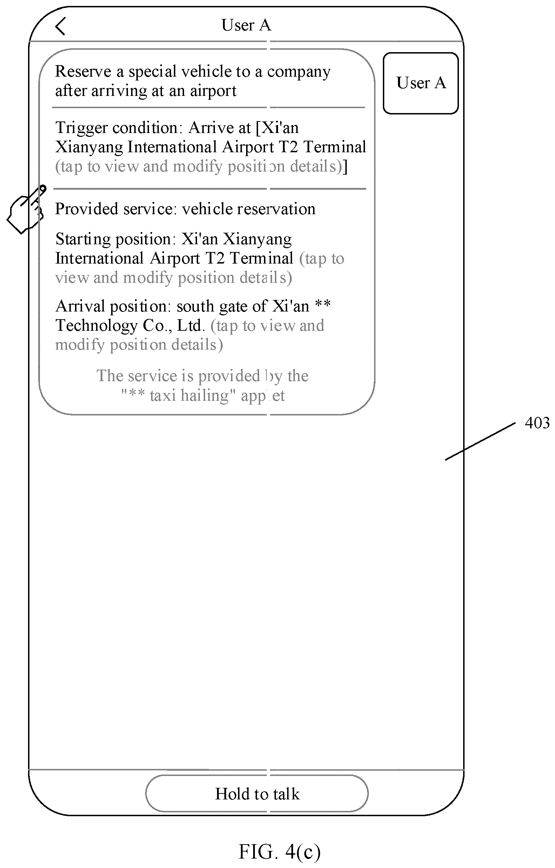

In some embodiments, the IM application on the mobile phone B may further display the first scenario message to the user B. For example, the IM application on the mobile phone B may display the card corresponding to the first scenario message. In this case, a display interface 403 of the mobile phone B may be shown in FIG. 4(c).

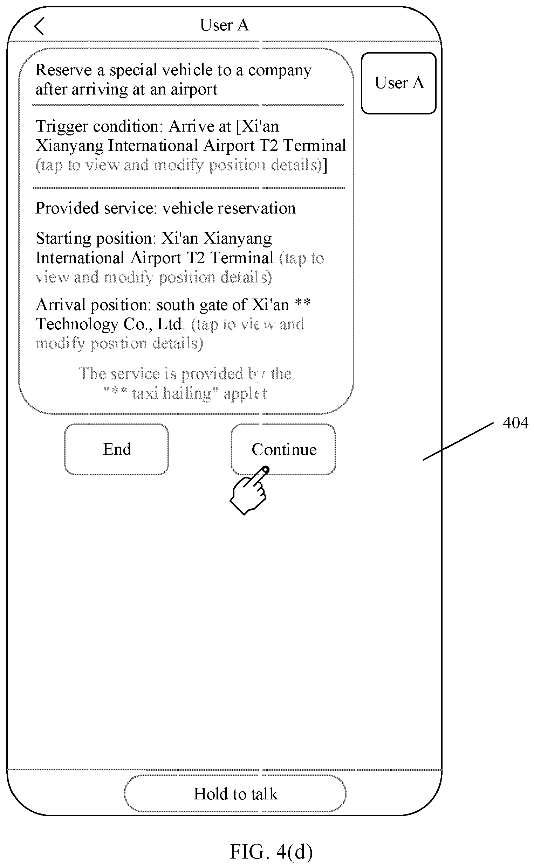

In some embodiments, after receiving the card in FIG. 4(c), the user B may further choose to terminate execution of the first scenario message. For example, the user B may touch and hold the card in FIG. 4(c), and then the mobile phone B displays a display interface 404 shown in FIG. 4(d). If the user B is unwilling to trigger the first service when the first trigger condition is met, the user B may tap an "End" button; otherwise, the user B may tap a "Continue" button. If the "End" button is selected, the mobile phone B terminates execution of the first scenario message; otherwise, the mobile phone B continues to execute the first scenario message. That execution of the first scenario message is terminated may be understood as follows: triggerCondition that has been registered with the engine used to determine whether the trigger condition is met is deregistered from the engine.

It is assumed that in step 307, the user B does not terminate execution of the first scenario message.

Step 308: When determining that the first trigger condition is met, the mobile phone B invokes, based on the first scenario message, the execution carrier for the first service to execute the first service.

After completing registration of triggerCondition, the engine may invoke an interface to obtain a current position of the mobile phone B. When the user B arrives at "Xi'an Xianyang International Airport T2 Terminal", the engine may determine that the first trigger condition is met. In this case, the engine may report the identification information of the first scenario message to the IM application on the mobile phone B, and the IM application on the mobile phone B determines, based on the identification information of the first scenario message, that the first trigger condition corresponding to the first scenario message is met, then, the IM application on the mobile phone B may invoke, based on the first scenario message, the "** taxi hailing" applet to reserve a special vehicle from "Xi'an Xianyang International Airport T2 Terminal" to "South gate, Xi'an ** Technology Co., Ltd.".

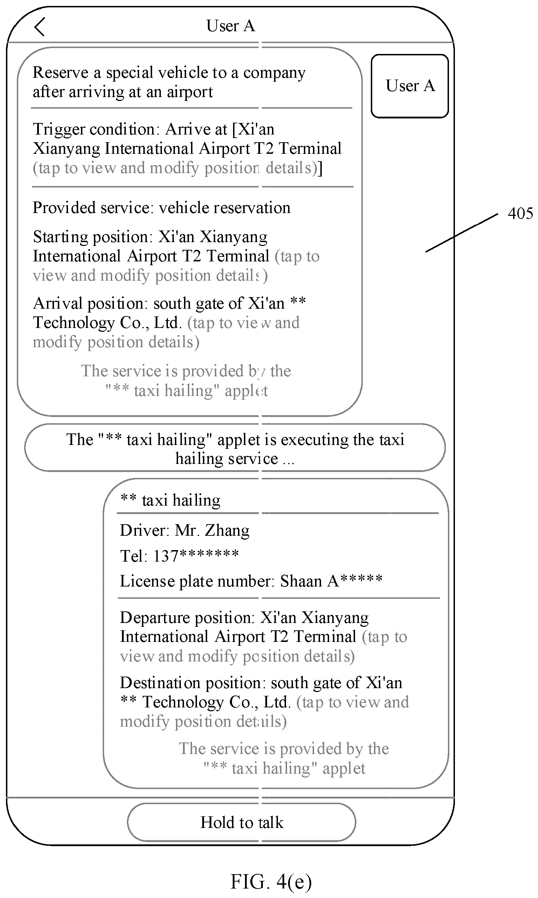

In addition, when the IM application on the mobile phone B invokes "** taxi hailing" to execute a taxi hailing service, a message may be used to prompt the user B that the first trigger condition is met and the first service is being executed, and information about the vehicle may be displayed to the user B after the special vehicle is successfully reserved. For example, the IM application on the mobile phone B may trigger the mobile phone B to display an interface 405 shown in FIG. 4(e), so that the user B can learn the information about the vehicle based on content displayed in the interface 405.

It should be noted that the foregoing description of the method 300 is only used as an example for description, but does not constitute a limitation on this embodiment of this application. For example, during specific implementation, only step 301, step 302, step 306, and step 308 in the method 300 may be performed, and step 303, step 304, step 305, and step 307 are not performed. In other words, after generating the first scenario message, the first server may directly send the first scenario message to the mobile phone B without requiring the user A to confirm the first scenario message. After receiving the first scenario message, the mobile phone B may directly determine whether the first trigger condition is met without displaying the card corresponding to the first scenario message to the user B, and when the first trigger condition is met, invokes, based on the first scenario message, the execution carrier for the first service to execute the first service.

It should be further noted that, when generating the first scenario message, the first server may not determine the trigger type. In other words, the first scenario message may not include the triggerType field. After receiving the first scenario message that does not include the triggerType field, the mobile phone B may determine, based on the triggerCondition field in the first scenario message, the trigger type corresponding to the first trigger condition.

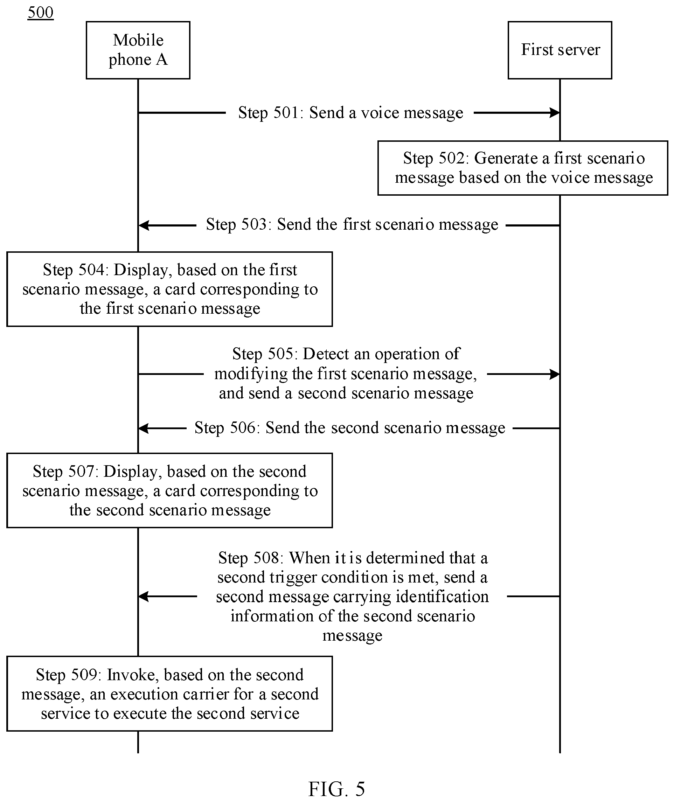

For example, the correspondence between the trigger condition and the trigger type is configured on the mobile phone B, and the mobile phone B may determine, based on the correspondence between the trigger condition and the trigger type, the trigger type corresponding to the first trigger condition. For example, the correspondence indicates that the trigger type corresponding to "arriving at an airport" is the trigger on the device side. In this case, the mobile phone B may determine, based on the correspondence and the triggerCondition field, that the trigger type corresponding to the first trigger condition is the trigger on the device side. The following describes another example of a method for triggering service execution according to an embodiment of this application by using an example in which a user sends an IM message to the user by using a client, a trigger type is the trigger on the cloud side in Case 1, and the client is a mobile phone A. FIG. 5 is a schematic flowchart of a method 500 for triggering service execution.

Step 501: A mobile phone A sends a voice message to the mobile phone A via a first server. The voice message corresponds to an IM message.

It is assumed that an IM application is installed on the mobile phone A, and a user of the mobile phone A may send the voice message to the user A by using the IM application. For ease of description, the user of the mobile phone A is referred to as a user A.

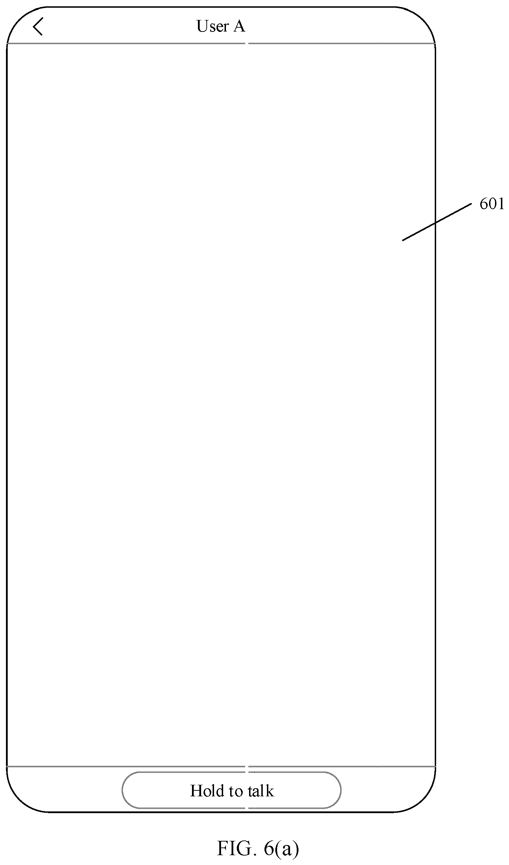

For example, on the mobile phone A, a message interface that is between the user A and the user A and that is in the IM application is an interface 601 shown in FIG. 6(a). The user A may touch and hold a "Hold to talk" button, and send, to the user A, a voice message "if it rains at 8 o'clock tomorrow, reserving a special vehicle from home to a company".

Step 502: The first server generates a first scenario message based on the voice message, where the first scenario message includes description information corresponding to a first trigger condition, identification information of an execution carrier for a first service, and parameter information that needs to be invoked when the first service is executed.

When the user A sends the foregoing voice message to the user A by using the IM application on the mobile phone A, the voice message first arrives at the first server. The first server may first convert, by using the ASR technology, a voice from the user A into a text "if it rains at 8 o'clock tomorrow, a special vehicle from home to a company is reserved", and then identify, from the text by using the NLP technology, that the first trigger condition is "if it rains at 8 o'clock tomorrow", and the first service is " reserving a special vehicle from home to a company".

To generate the first scenario message, the first server further needs to obtain specific coordinates of home and the company. For example, the first server may determine specific coordinates of an airport and the company based on positions of home and the company that are set by the user A. For example, the user A may set positions of home and the company by using the IM application. For example, the position of home may be set to: North gate, xx Community, Chang'an District, Xi'an, and the position of the company may be set to: South gate, Xi'an ** Technology Co., Ltd. The positions and specific coordinates of home and the company are synchronized to the first server, and the first server obtains the specific coordinates of home and the company.

The first server further needs to associate, for the first service, a carrier that can execute the first service. For example, the execution carrier associated by the first server for the first service is a "** taxi hailing" applet.

In some embodiments, the first server may further determine a trigger type. For example, a correspondence between a trigger condition and a trigger type is configured for the first server. The first server may determine, based on the correspondence between the trigger condition and the trigger type, a trigger type corresponding to the first trigger condition. For example, the correspondence indicates that a trigger type corresponding to "a rainy day" is the trigger on the cloud side. In this case, the first server may determine, based on the correspondence and the first trigger condition, that the trigger type corresponding to the first trigger condition is the trigger on the cloud side.

Then, the first server may generate the first scenario message. For example, the first scenario message may include the following fields:
displayMsg: "If it rains at 8 o'clock tomorrow, reserve a special vehicle from home to a company";
triggerCondition: {"conditionType": "CHECK_WEATHER", "weather": "RAINING", "city": "Xi'an", "time": 1626998400000};
triggerType: trigger on the cloud side;
serviceId: ID of the "** taxi hailing" applet; and
serviceOpt: {"fromPosition": "{home: North gate, xx Community, Chang'an District, Xi'an, specific coordinates: xxx}", "toPosition": "{company: South gate, Xi'an ** Technology Co., Ltd., specific coordinates: xxx}", operation: "TAKE_TAXI"}.

Content of triggerCondition corresponds to the description information corresponding to the first trigger condition, content of serviceId corresponds to the identification information of the execution carrier for the first service, content of triggerType corresponds to the trigger type, and content of serviceOpt corresponds to the parameter information that needs to be invoked when the first service is executed.

Step 503: The first server sends the first scenario message to the mobile phone A.

Step 504: The mobile phone A displays, based on the first scenario message, a card corresponding to the first scenario message.

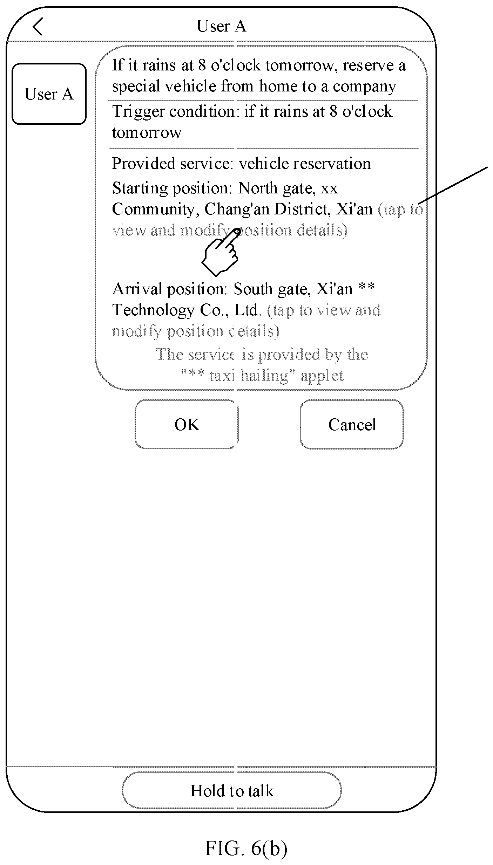

Because the first scenario message created based on the voice message is unreliable to some extent, after generating the first scenario message, the first server may send the first scenario message to the IM application on the mobile phone A. After receiving the first scenario message, the IM application on the mobile phone A may display the first scenario message to the user A, so that the user A confirms the first scenario message. For example, the IM application on the mobile phone A may trigger the mobile phone A to display the card corresponding to the first scenario message, in this case, a display interface 602 of the mobile phone A may be shown in FIG. 6(b).

In some embodiments, the user A may determine, based on information displayed in the card, whether a trigger condition, a starting position, or a destination position in the card needs to be modified. It should be noted that the trigger condition in FIG. 6(b) to FIG. 6(f) corresponds to the first trigger condition.

When modification is not required, and the user A determines to send the first scenario message, the user A may tap an "OK" button to trigger the mobile phone A to send the first scenario message. When modification is required, the user A may modify corresponding information by using a modification entrance. For example, if the user A wants to modify the destination position, the user A may modify the destination position by tapping a "tap to view and modify position details" button, and the "tap to view and modify position details" button is a modification entrance.

It should be noted that, if the card in the interface 602 does not provide a modification entrance, the user A may tap a "Cancel" button to cancel sending of the first scenario message and then resend the voice message, to modify information that needs to be modified. In addition, regardless of whether the user A needs to modify information displayed in the card, the user A may tap a "Cancel" button at any time to cancel sending of the scenario message.

Step 505: The mobile phone A detects an operation of modifying the first scenario message, and sends a second scenario message to the mobile phone A via the first server, where the second scenario message is generated by modifying the first scenario message.

In some embodiments, when the user A modifies at least one of the trigger condition, the starting position, or the destination position in FIG. 6(b), the mobile phone A modifies related content in response to the operation, and triggers the mobile phone A to display a modified card.

For example, the user A changes the destination position from "North gate, xx Community, Chang'an District, Xi'an" to "West gate, xx Community, Chang'an District, Xi'an" by using a "tap to view and modify position details" button in FIG. 6(b). In this case, the IM application on the mobile phone A modifies, in response to the operation, a "serviceOpt" field in the first scenario message, and generates the second scenario message, where the second scenario message may include the following fields:
displayMsg: "If it rains at 8 o'clock tomorrow, reserve a special vehicle from home to a company";
triggerCondition: {"conditionType": "CHECK_WEATHER", "weather": "RAINING", "city": "Xi'an", "time": 1626998400000};
triggerType: trigger on the cloud side;
serviceId: ID of the "** taxi hailing" applet; and
serviceOpt: {"fromPosition": "{home: West gate, xx Community, Chang'an District, Xi'an, specific coordinates: xxx}", "toPosition": "{company: South gate, Xi'an ** Technology Co., Ltd., specific coordinates: xxx}", operation: "TAKE_TAXI"}.

Content of triggerCondition corresponds to description information corresponding to a second trigger condition, content of serviceId corresponds to identification information of an execution carrier for a second service, content of triggerType corresponds to the trigger type, and content of serviceOpt corresponds to parameter information that needs to be invoked when the second service is executed. It should be noted that, compared with the first scenario message, the second scenario message only changes serviceOpt in the first scenario message, and other fields are consistent with related fields in the first scenario message. For example, content of the second trigger condition in the second scenario message is the same as content of the first trigger condition in the first scenario message.

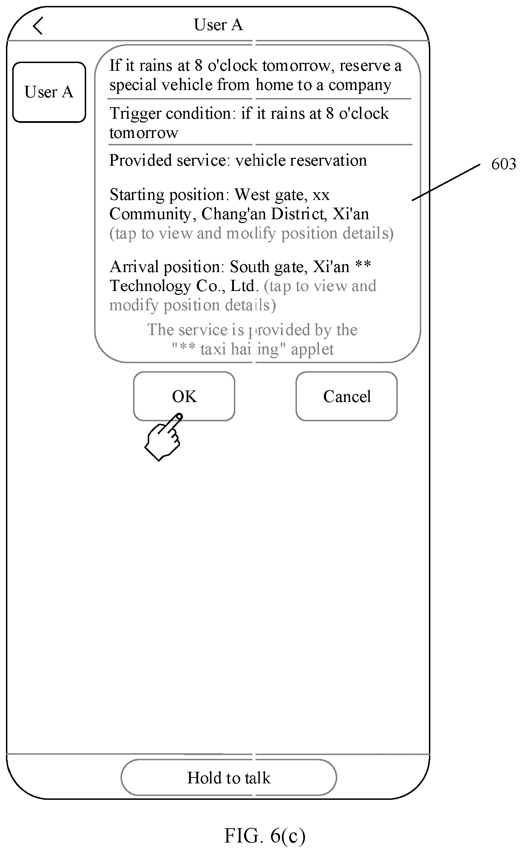

Then, a card corresponding to the second scenario message may be displayed to the user A. In this case, the IM application on the mobile phone A may trigger the mobile phone A to display an interface 603 shown in FIG. 6(c). Then, if the IM application on the mobile phone A detects an operation of tapping the "OK" button, the IM application on the mobile phone A sends the second scenario message to the IM application on the mobile phone A.

In step 505, it is assumed that the user A triggers the IM application on the mobile phone A to modify the first scenario message, and it is assumed that the user A taps the "OK" button in the interface 603.

Step 506: The first server sends the second scenario message to the mobile phone A.

As described above, the second scenario message sent by the user A to the user A by using the IM application on the mobile phone A first arrives at the first server, and then the first server forwards the second scenario message to the IM application on the mobile phone A.

Because the trigger type is the trigger on the cloud side, after generating the second scenario message, the first server may register triggerCondition: {"conditionType": "CHECK_WEATHER", "weather": "RAINING", "city": "Xi'an", "time": 1626998400000} in the second scenario message with the engine used to determine whether the trigger condition is met, so that the engine determines whether the second trigger condition is met.

Step 507: The mobile phone A displays, based on the second scenario message, the card corresponding to the second scenario message.

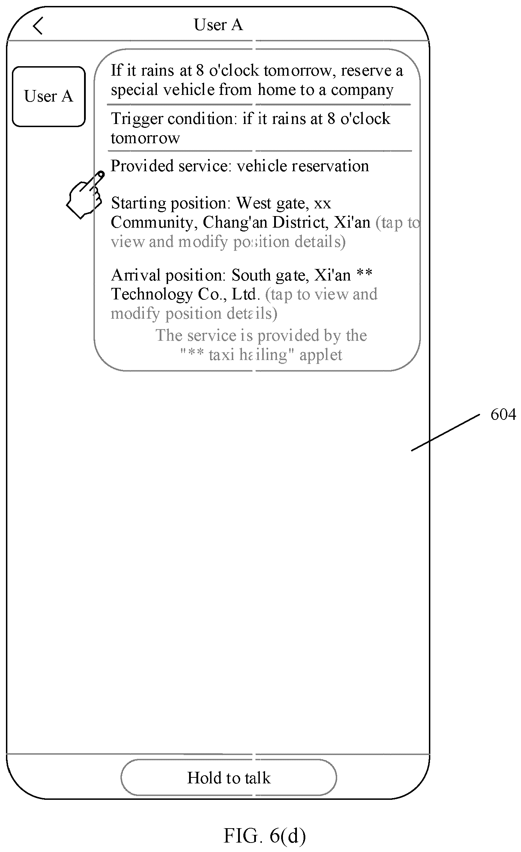

After receiving the second scenario message, the IM application on the mobile phone A may display the second scenario message to the user A. For example, the IM application on the mobile phone A may display the card corresponding to the second scenario message. In this case, the display interface 604 of the mobile phone A may be shown in FIG. 6(d).

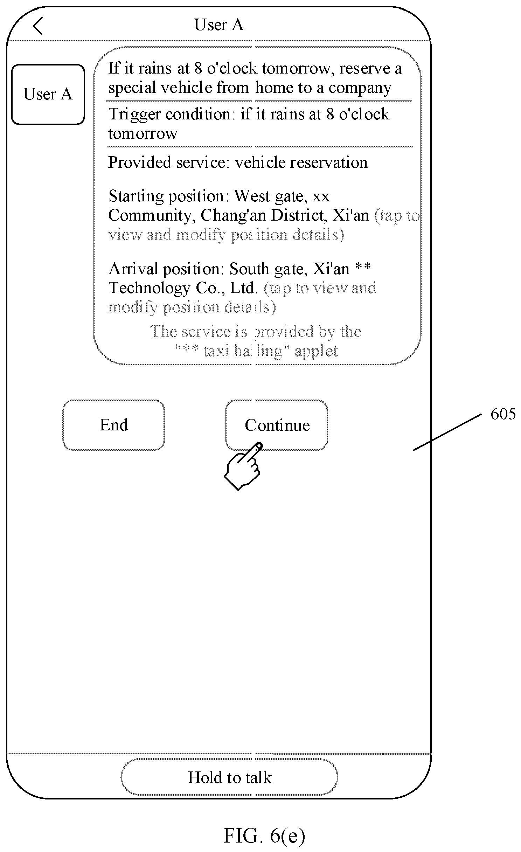

In some embodiments, after receiving the card in FIG. 6(d), the user A may choose to terminate execution of the second scenario message. For example, the user A may touch and hold the card in FIG. 6(d), and then the mobile phone A displays a display interface 605 shown in FIG. 6(e). If the user A is unwilling to trigger the second service when the trigger condition is met, the user A may tap an "End" button; otherwise, the user A may tap a "Continue" button. If the "End" button is selected, the mobile phone A may report, to the first server, a result that the user selects to terminate execution of the second scenario message. In this case, triggerCondition that has been registered with the engine used to determine whether the trigger condition is met is deregistered from the engine.

It should be noted that, after receiving the first scenario message, the mobile phone A may determine, based on the triggerType field in the first scenario message, that the trigger type is the trigger on the cloud side. Therefore, the mobile phone A may determine that the mobile phone A does not need to determine whether the second trigger condition is met, and the IM application on the mobile phone A may not need to register triggerCondition: {"condition Type": "CHECK_WEATHER", "weather": "RAINING", "city": "Xi'an", "time": 1626998400000} in the second scenario message with an engine that is in the mobile phone A and that is used to determine whether the trigger condition is met.

It is assumed that in step 507, the user A does not terminate execution of the second scenario message.

Step 508: When determining that the second trigger condition is met, the first server sends a second message to the mobile phone A, where the second message carries identification information of the second scenario message.

After the engine used to determine whether the trigger condition is met completes registration of triggerCondition, the engine may invoke an interface to obtain current time and weather. If the current time is at 18 o'clock and it is raining currently, the engine may determine that the second trigger condition is already met. In this case, the first server may send the second message to the mobile phone A, where the second message carries the identification information of the second scenario message.

Step 509: The mobile phone A invokes, based on the second message, the execution carrier for the second service to execute the second service.

The IM application on the mobile phone A determines, based on the identification information of the second scenario message, that the second trigger condition corresponding to the second scenario message is met. Then, the IM application on the mobile phone A may invoke, based on the second scenario message, the "** taxi hailing" applet to reserve a special vehicle from "South gate, Xi'an ** Technology Co., Ltd." to "West gate, xx Community, Chang'an District, Xi'an".

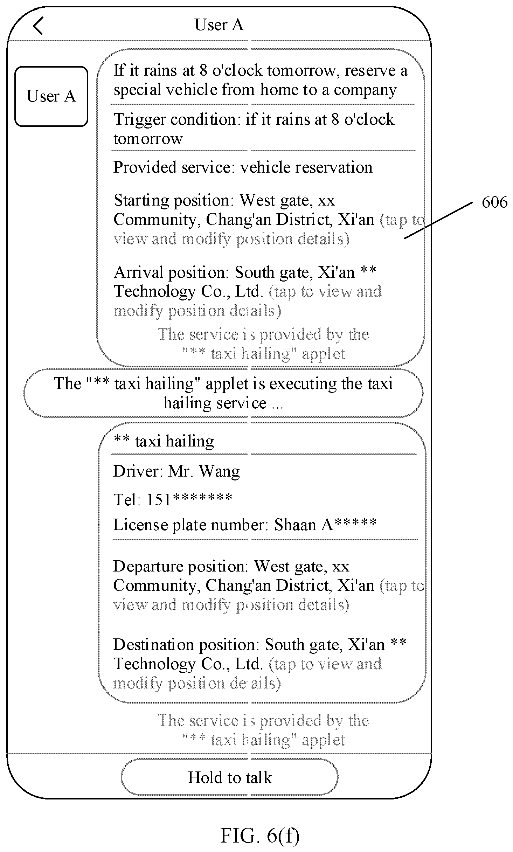

In addition, when the IM application on the mobile phone A invokes "** taxi hailing" to execute a taxi hailing service, a message may be used to prompt the user A that the trigger condition is met and the second service is being executed, and information about the vehicle may be displayed to the user A after the special vehicle is successfully reserved. For example, the IM application on the mobile phone A may trigger the mobile phone A to display an interface 606 shown in FIG. 6(f), so that the user A can learn the information about the vehicle based on content displayed in the interface 606.

It should be noted that the foregoing description of the method 500 is only used as an example for description, but does not constitute a limitation on this embodiment of this application. For example, in specific implementation, after generating the first scenario message, the first server may directly send the first scenario message to the mobile phone A without requiring the user A to confirm the first scenario message. After receiving the first scenario message, the mobile phone A directly determines whether the first trigger condition is met without displaying the card corresponding to the first scenario message to the user A, in addition, when the first trigger condition is met, the execution carrier for the first service is invoked based on the first scenario message to execute the first service.

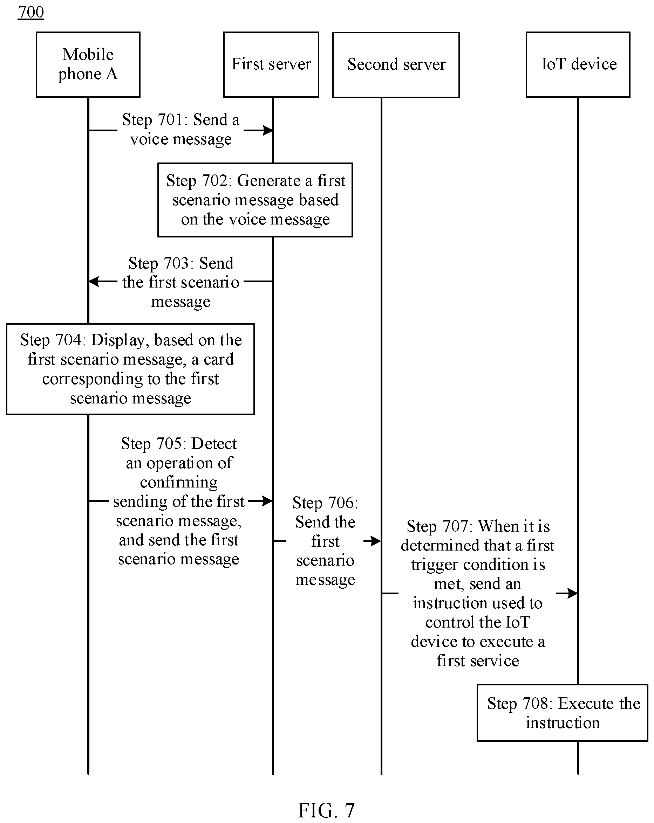

It should be further noted that, for the trigger on the cloud side, the mobile phone A may not need to determine whether the first trigger condition is met. In this case, the first server may not send a first scenario message including the triggerType field to the mobile phone A. The following describes another example of a method for triggering service execution according to an embodiment of this application by using an example in which a user sends an IM message to an IoT device by using a client, a trigger type is the trigger on the device side in Case 2, the client is a mobile phone A, and the IoT device is a smart refrigerator. FIG. 7 is a schematic flowchart of a method 700 for triggering service execution. It should be noted that, in the method 700, the IoT device has no capability of determining whether a condition for triggering service execution is met.

Step 701: The mobile phone A sends a voice message to the IoT device via a first server and a second server. The voice message corresponds to an IM message.

It is assumed that an IM application is installed on the mobile phone A, and a user of the mobile phone A may send the voice message by using the IM application. For ease of description, the user of the mobile phone A is referred to as a user A.

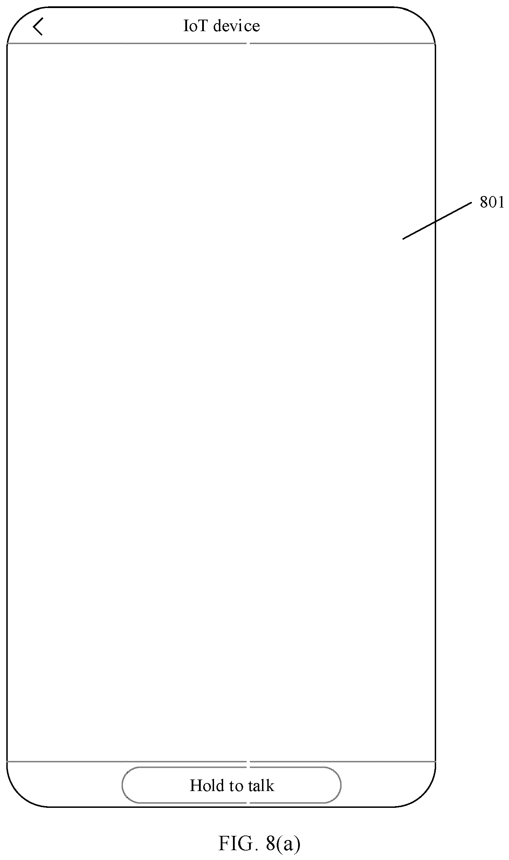

For example, on the mobile phone A, a message interface that is between the user A and the smart refrigerator and that is in the IM application is an interface 801 shown in FIG. 8(a). The user A may touch and hold a "Hold to talk" button, and send a voice message "reminding me to buy fruits when there is no fruit in the refrigerator".

Step 702: The first server generates a first scenario message based on the voice message, where the first scenario message includes description information corresponding to a first trigger condition, identification information of an execution carrier for a first service, and parameter information that needs to be invoked when the first service is executed.

A voice message sent by an IM application on the mobile phone A first arrives at the first server. The first server may first convert, by using an ASR technology, a voice from the user A into a text "reminding me to buy fruits when there is no fruit in the refrigerator", and then identify, by using an NLP technology, from the text that the first trigger condition is "no fruit in the refrigerator", and the first service is "reminding me to buy fruits".

To generate the first scenario message, the first server further needs to associate, for the first service, a carrier that can execute the first service. For example, an execution carrier associated by the first server for the first service is a "refrigerator control" service.

In some embodiments, the first server may further determine a trigger type. For example, a correspondence between a trigger condition and a trigger type is configured for the first server. The first server may determine, based on the correspondence between the trigger condition and the trigger type, a trigger type corresponding to the first trigger condition. For example, the correspondence indicates that a trigger type corresponding to "no fruit in the refrigerator" is the trigger on the device side. In this case, the first server may determine, based on the correspondence and the first trigger condition, that the trigger type corresponding to the first trigger condition is the trigger on the device side.

Then, the first server may generate the first scenario message. For example, the first scenario message may include the following fields:
displayMsg: Remind me to buy fruits when there is no fruit in the refrigerator;
triggerCondition: {"conditionType": "CHECK_DEVICE_STATUS", "condition": "FRUIT_LACK_NOTIFY"};
triggerType: trigger on the device side;
serviceId: ID of the "refrigerator control" service; and
serviceOpt: {"IoTDeviceUserId": "650536430363001", "IoTDeviceId": "t030199873a628a8a80a2", "operation": "FRUIT_LACK_NOTIFY"}.

Content of triggerCondition corresponds to the description information corresponding to the first trigger condition, content of serviceId corresponds to the identification information of the execution carrier for the first service, content of triggerType corresponds to the trigger type, and content of serviceOpt corresponds to the parameter information that needs to be invoked when the first service is executed.

Step 703: The first server sends the first scenario message to the mobile phone A.

Step 704: The mobile phone A displays, based on the first scenario message, a card corresponding to the first scenario message.

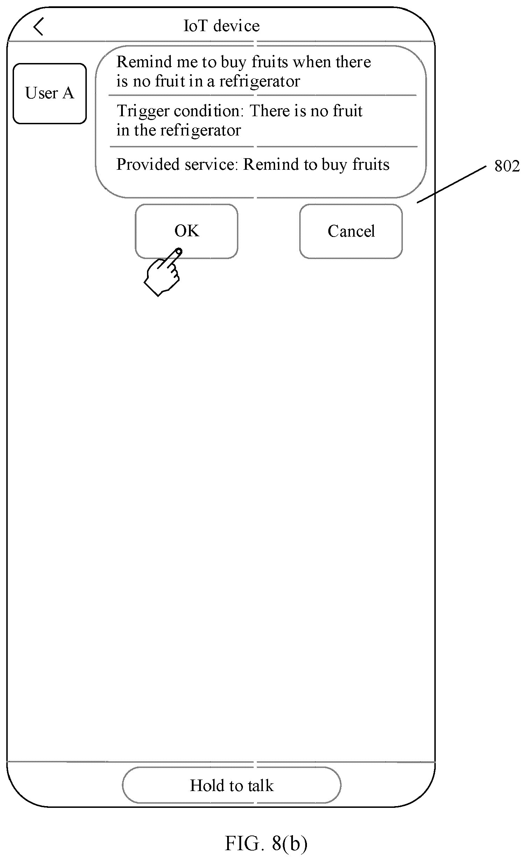

Because the first scenario message created based on the voice message is unreliable to some extent, after generating the first scenario message, the first server may send the first scenario message to the IM application on the mobile phone A. After receiving the first scenario message, the IM application on the mobile phone A may display the first scenario message to the user A, so that the user A confirms the first scenario message. For example, the IM application on the mobile phone A may trigger the mobile phone A to display the card corresponding to the first scenario message, in this case, a display interface 802 of the mobile phone A may be shown in FIG. 8(b).

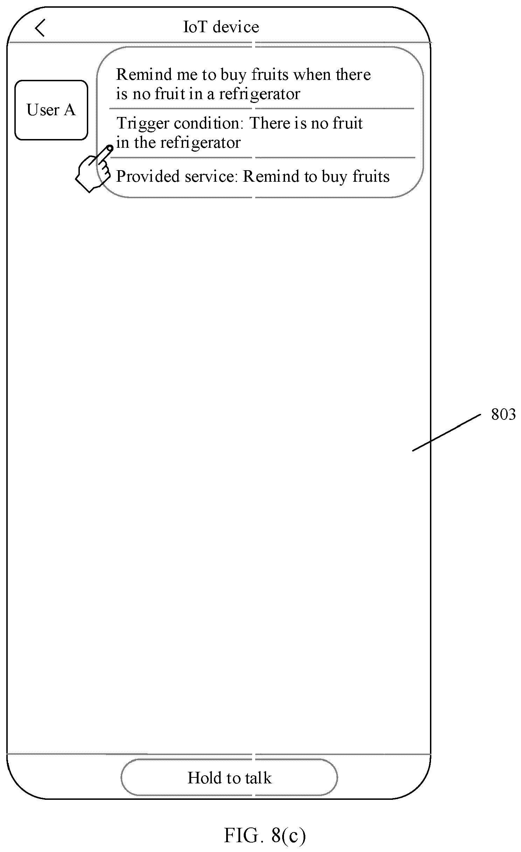

In some embodiments, the user A may determine, based on the card displayed in the display interface 802, whether information displayed in the card needs to be modified. It should be noted that the trigger condition in FIG. 8(b) and FIG. 8(c) corresponds to the first trigger condition.

When the information displayed in the card does not need to be modified, and the user A determines to send the first scenario message, the user A may tap an "OK" button to trigger the mobile phone A to send the first scenario message. When the information displayed in the card needs to be modified, if the card provides a corresponding modification entrance, the user A may modify corresponding content by using the modification entrance; or if the card does not provide a corresponding modification entrance, the user A may tap a "Cancel" button, cancel sending of the first scenario message and then resend the voice message, to modify the information that needs to be modified. It should be noted that, regardless of whether the user A needs to modify the information displayed in the card, the user A may tap the "Cancel" button at any time to cancel sending of the scenario message.

Step 705: The mobile phone A detects an operation of confirming sending of the first scenario message, and sends the first scenario message to the IoT device via the first server and the second server.

In some embodiments, the user A taps an "OK" button in FIG. 8(b), and the IM application on the mobile phone A sends, in response to the operation, the first scenario message to the IoT device via the first server and the second server.

Step 706: The first server sends the first scenario message to the second server.

The first scenario message sent by the mobile phone A to the smart refrigerator first arrives at the first server, and after receiving the first scenario message, the first server sends the first scenario message to the second server.

After receiving the first scenario message, the second server may determine, based on the triggerType field in the first scenario message, that the trigger type is the trigger on the device side, that is, the second server determines whether the first trigger condition is met. When determining whether the first trigger condition is met, the second server may register triggerCondition: {"conditionType": "CHECK_DEVICE_STATUS", "condition": "FRUIT_LACK_NOTIFY "} in the first scenario message with an engine used to determine whether the trigger condition is met, to determine, through the engine, whether the first trigger condition is met.

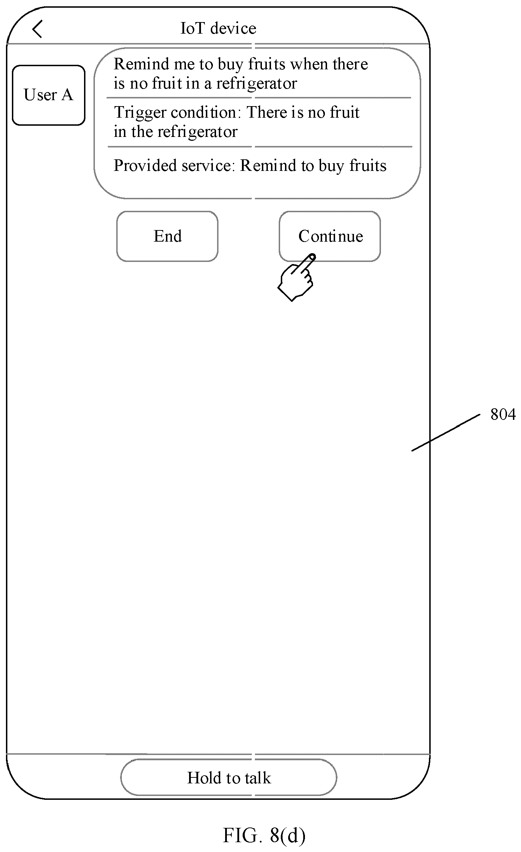

In some embodiments, after the user A taps the "OK" button in the interface 802, a display interface 803 of the mobile phone A may be shown in FIG. 8(c). In this case, the user A may choose to terminate execution of the first scenario message or continue to execute the first scenario message. For example, the user A may touch and hold the card in FIG. 8(c), and then the mobile phone A displays a display interface 804 shown in FIG. 8(d). If the user A is unwilling to trigger the first service when the trigger condition is met, the user A may tap an "End" button; otherwise, the user A may tap a "Continue" button.

If the user A selects the "End" button, the IM application on the mobile phone A may report to the first server that the execution of the first scenario message has been terminated, and then the first server notifies the second server that the execution of the first scenario message has been terminated. In this case, triggerCondition that has been registered with the engine that is in the second server and that is used to determine whether the trigger condition is met will be deregistered from the engine.

In the method 700, it is assumed that the user A selects the "Continue" button.

Step 707: When determining that the first trigger condition is met, the second server sends, to the IoT device, an instruction used to control the IoT device to execute the first service.

After the engine used to determine whether the trigger condition is met completes registration of triggerCondition, the engine may invoke an interface to obtain a status of a fruit fresh-keeping area in the smart refrigerator. If it is found that no fruit exists in the fruit freshening area in the smart refrigerator, the engine may determine that the first trigger condition is met. In this case, the second server may invoke the refrigerator control service to send an instruction used to execute the first service to the smart refrigerator, the second server invokes the refrigerator control service to send an instruction for controlling the smart refrigerator to remind the user to buy fruits to the smart refrigerator. It should be noted that, in this embodiment of this application, the smart refrigerator may be uniquely determined by using the subscriber identifier (IoTDeviceUserId) of the IoT device and the IoT device identifier (IoTDeviceId) in the first scenario message.

Step 708: The IoT device executes the instruction.

After receiving the foregoing instruction, the smart refrigerator may prompt, based on the instruction, the user to buy fruits by using a voice.

It should be noted that the foregoing description of the method 700 is only used as an example for description, but does not constitute a limitation on this embodiment of this application. For example, during specific implementation, only step 701, step 702, step 706, step 707, and step 708 in the method 700 may be performed, and step 703, step 704, and step 705 are not performed. In other words, after generating the first scenario message, the first server may directly send the first scenario message to the second server without requiring the user A to confirm the first scenario message, and then the second server sends the first scenario message to the IoT device.

It should be further noted that, when generating the first scenario message, the first server may not determine the trigger type. In other words, the first scenario message may not include the triggerType field. After receiving the first scenario message that does not include the triggerType field, the second server may determine, based on the triggerCondition field in the first scenario message, the trigger type corresponding to the first trigger condition.

For example, a correspondence between a trigger condition and a trigger type is configured for the second server, and the second server may determine, based on the correspondence between the trigger condition and the trigger type, a trigger type corresponding to the first trigger condition. For example, the correspondence indicates that a trigger type corresponding to "no fruit is in the refrigerator" is the trigger on the device side, and the second server may determine, based on the correspondence and the triggerCondition field, that the trigger type corresponding to the first trigger condition is the trigger on the device side.

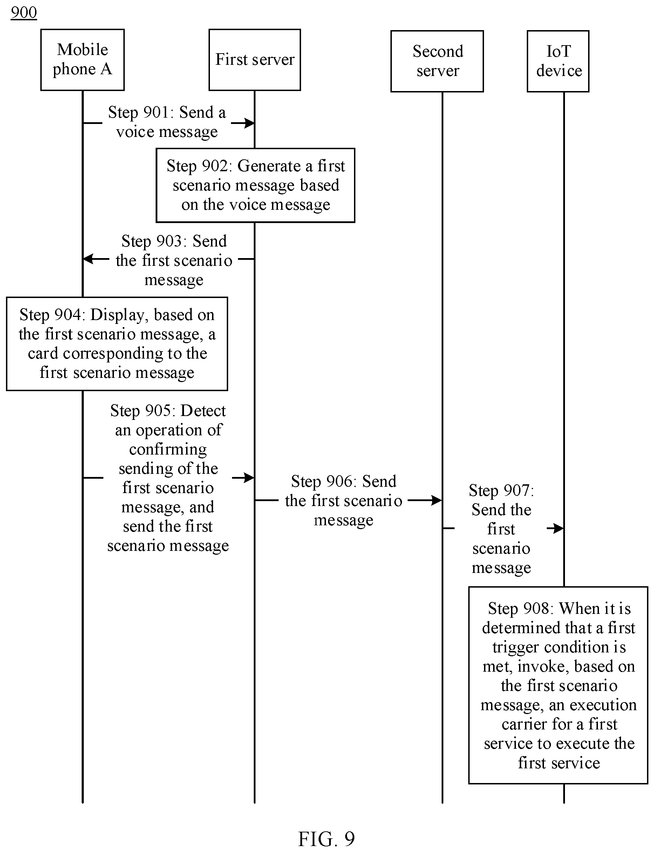

The following describes another example of a method for triggering service execution according to an embodiment of this application by using an example in which a user sends an IM message to an IoT device by using a client, a trigger type is the trigger on the device side in Case 3, the client is a mobile phone A, and the IoT device is a smart refrigerator. FIG. 9 is a schematic flowchart of a method 900 for triggering service execution. It should be noted that, in the method 900, the IoT device has a capability of determining whether a condition for triggering service execution is met.

Step 901: The mobile phone A sends a voice message to the IoT device via a first server and a second server. The voice message corresponds to an IM message.

It is assumed that an IM application is installed on the mobile phone A, and a user of the mobile phone A may send the voice message by using the IM application. For ease of description, the user of the mobile phone A is referred to as a user A.

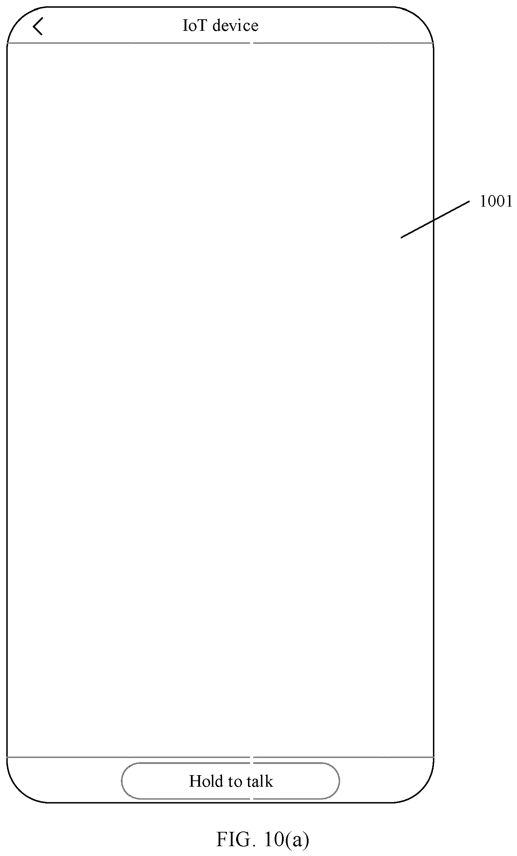

For example, on the mobile phone A, a message interface that is between the user A and the smart refrigerator and that is in the IM application is an interface 1001 shown in FIG. 10(a). The user A may touch and hold a "Hold to talk" button, and send a voice message "lower the temperature inside the refrigerator when the temperature exceeds 5°C".

Step 902: The first server generates a first scenario message based on the voice message, where the first scenario message includes description information corresponding to a first trigger condition, identification information of an execution carrier for a first service, and parameter information that needs to be invoked when the first service is executed.

A voice message sent by an IM application on the mobile phone A first arrives at the first server. The first server may first convert, by using an ASR technology, a voice from the user A into a text of "lowering the temperature inside the refrigerator when the temperature rises sharply", and then identify, from the text by using an NLP technology, that the first trigger condition is "the temperature exceeds 5°C", and the first service is "lowering the temperature inside the refrigerator".

To generate the first scenario message, the first server further needs to associate, for the first service, a carrier that can execute the first service. For example, an execution carrier associated by the first server for the first service is a "refrigerator control" service.

In some embodiments, the first server may further determine a trigger type. For example, a correspondence between a trigger condition and a trigger type is configured for the first server. The first server may determine, based on the correspondence between the trigger condition and the trigger type, a trigger type corresponding to the first trigger condition. For example, the correspondence indicates that a trigger type corresponding to "temperature change" is the trigger on the device side. In this case, the first server may determine, based on the correspondence and the first trigger condition, that the trigger type corresponding to the first trigger condition is the trigger on the device side.

Then, the first server may generate the first scenario message. For example, the first scenario message may include the following fields:
displayMsg: "When a temperature exceeds 5°C, lower the temperature inside the refrigerator";
triggerCondition: {"conditionType": "CHECK_TEMPERATURE", "condition": "TEMPERATURE≥5°C"};
triggerType: trigger on the device side;
serviceId: ID of the "refrigerator control" service; and
serviceOpt: {"IoTDeviceUserId": "650536430363001", "IoTDeviceId": "f030f99873a628a8a80a2", "operation": "Lower The Internal Temperature"}.

Content of triggerCondition corresponds to the description information corresponding to the first trigger condition, content of serviceId corresponds to the identification information of the execution carrier for the first service, content of triggerType corresponds to the trigger type, and content of serviceOpt corresponds to the parameter information that needs to be invoked when the first service is executed.

Step 903: The first server sends the first scenario message to the mobile phone A.

Step 904: The mobile phone A displays, based on the first scenario message, a card corresponding to the first scenario message.

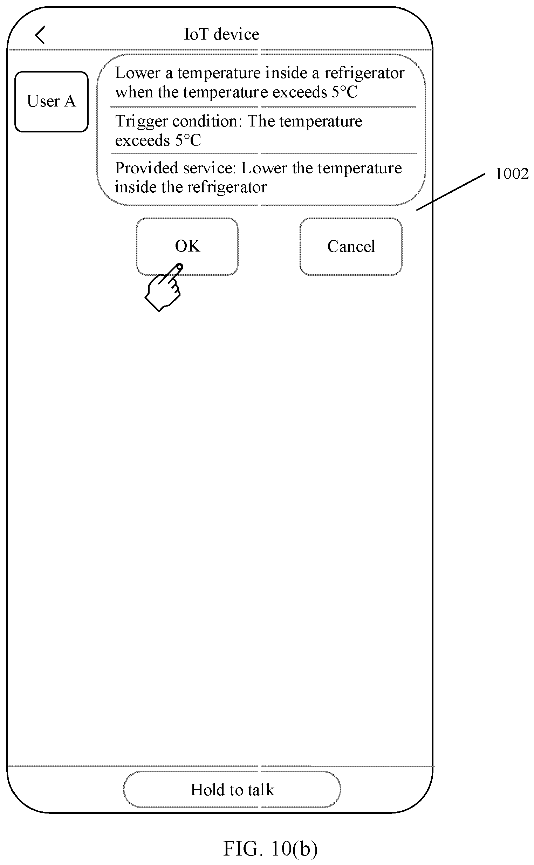

Because the first scenario message created based on the voice message is unreliable to some extent, after generating the first scenario message, the first server may send the first scenario message to the IM application on the mobile phone A. After receiving the first scenario message, the IM application on the mobile phone A may display the first scenario message to the user A, so that the user A confirms the first scenario message. For example, the IM application on the mobile phone A may trigger the mobile phone A to display the card corresponding to the first scenario message, in this case, a display interface 1002 of the mobile phone A may be shown in FIG. 10(b).

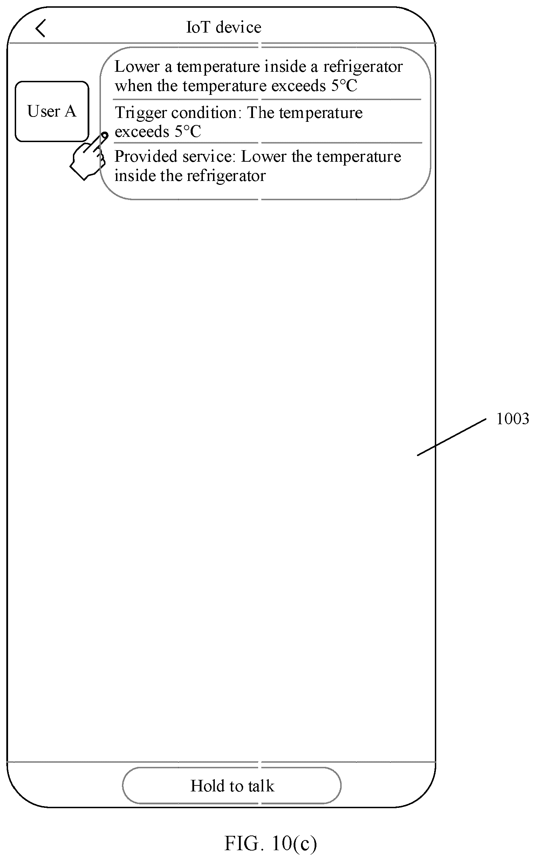

In some embodiments, the user A may determine, based on the card displayed in the display interface 1002, whether information displayed in the card needs to be modified. It should be noted that the trigger condition in FIG. 10(b) and FIG. 10(c) corresponds to the first trigger condition.

When the information displayed in the card does not need to be modified, and the user A determines to send the first scenario message, the user A may tap an "OK" button to trigger the mobile phone A to send the first scenario message. When the information displayed in the card needs to be modified, if the card provides a corresponding modification entrance, the user A may modify corresponding content by using the modification entrance; or if the card does not provide a corresponding modification entrance, the user A may tap a "Cancel" button, cancel sending of the first scenario message and then resend the voice message, to modify the information that needs to be modified. It should be noted that, regardless of whether the user A needs to modify the information displayed in the card, the user A may tap the "Cancel" button at any time to cancel sending of the scenario message.

Step 905: The mobile phone A an operation of confirming sending of the first scenario message, and the mobile phone A sends the first scenario message to the IoT device via the first server and the second server.

In some embodiments, the user A taps an "OK" button in FIG. 10(b), and the IM application on the mobile phone A sends, in response to the operation, the first scenario message to the IoT device via the first server and the second server.

Step 906: The first server sends the first scenario message to the IoT device via the second server.

The first scenario message sent by the mobile phone A to the smart refrigerator first arrives at the first server, and after the first server receives the first scenario message, the second server forwards the first scenario message to the smart refrigerator.

After receiving the first scenario message, the IoT device may determine, based on the triggerType field in the first scenario message, that the trigger type is the trigger on the device side, that is, the IoT device determines whether the first trigger condition is met. When it is determined whether the first trigger condition is met, the IoT device may register triggerCondition: {"condition Type": "CHECK_TEMPERATURE", "condition": " TEMPERATURE ≥5°C"} in the first scenario message with an engine that is in the IoT device and that is used to determine whether the trigger condition is met, to determine, through the engine, whether the first trigger condition is met.

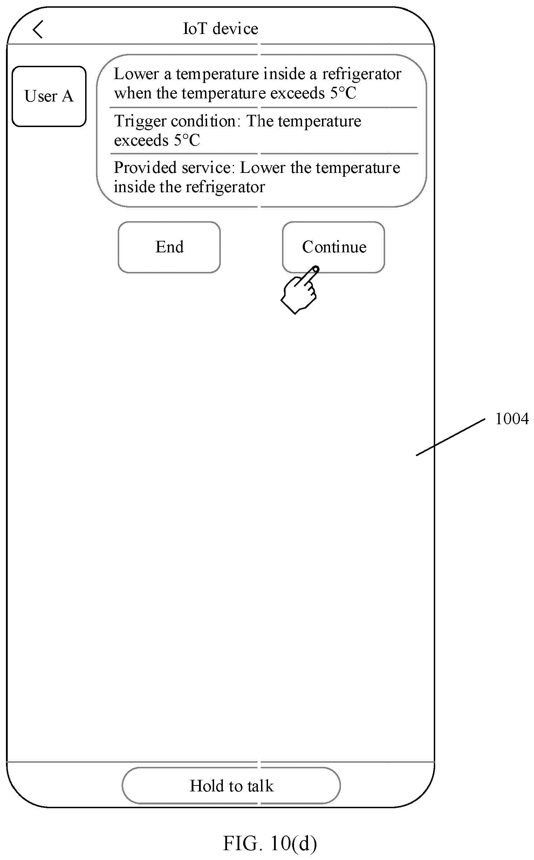

In some embodiments, after the user A taps the "OK" button in the interface 1002, a display interface 1003 of the mobile phone A may be shown in FIG. 10(c). In this case, the user A may choose to terminate execution of the first scenario message or continue to execute the first scenario message. For example, the user A may touch and hold the card in FIG. 10(c), and then the mobile phone A displays a display interface 1004 shown in FIG. 10(d). If the user Ais unwilling to trigger the first service when the trigger condition is met, the user A may tap an "End" button; otherwise, the user A may tap a "Continue" button.

If the user A selects the "End" button, the IM application on the mobile phone A may report to the first server that execution of the first scenario message has been terminated, and then, the first server notifies the second server that execution of the first scenario message has been terminated, and the second server notifies the IoT device that execution of the first scenario message has been terminated. In this case, triggerCondition that has been registered with the engine that is in the IoT device and that is used to determine whether the trigger condition is met will be deregistered from the engine.

In the method 900, it is assumed that the user A selects the "Continue" button.

Step 907: The second server sends the first scenario message to the IoT device.

After the engine used to determine whether the trigger condition is met completes registration of triggerCondition, the engine may invoke an interface to obtain the current temperature. If the current temperature rises sharply compared with the previous temperature, the engine may determine that the first trigger condition is met. In this case, the first server may send the first message to the smart refrigerator, where the first message carries the identification information of the first scenario message.

Step 908: When determining that the first trigger condition is met, the IoT device invokes, based on the first message, the execution carrier for the first service to execute the first service.

After completing registration of triggerCondition, the foregoing engine may invoke an interface to obtain a current temperature inside the refrigerator. When the current temperature exceeds 5°C, the foregoing engine may determine that the first trigger condition is met. In this case, the smart refrigerator may invoke, based on the first scenario message, a "refrigerator control" service to lower the temperature inside the refrigerator.

It should be noted that the foregoing description of the method 900 is only used as an example for description, but does not constitute a limitation on this embodiment of this application. For example, in specific implementation, after generating the first scenario message, the first server may directly send, via the second server, the first scenario message to the IoT device without requiring the user A to confirm the first scenario message. It should be noted that in this embodiment of this application, the method for triggering service execution is described by using only the voice message as an example. However, this does not constitute a limitation on this application. The method for triggering service execution provided in this embodiment of this application is also applicable to a text message.

It should be further noted that, in this embodiment of this application, the foregoing fields included in the first scenario message and the second scenario message listed above are only used as examples for description, and do not constitute a limitation on this embodiment of this application. For example, in specific implementation, the first scenario message and the second scenario message may include more or fewer fields than those in the foregoing examples. This is not limited in this embodiment of this application.

It should be further noted that, in this embodiment of this application, the triggerType field may be carried by the first server in the first scenario message or the second scenario message, and sent to the receive end of the scenario message or the second server. In addition, the first server may not carry the triggerType field in the first scenario message or the second scenario message, but a receive end of the scenario message or the second server determines the trigger type. This is not limited in this embodiment of this application. For a method for determining the trigger type by using the receive end of the scenario message or the second server, refer to the foregoing related descriptions. For brevity, details are not described herein again.

It should be further noted that the method 300, the method 500, the method 700, and the method 900 are only used as examples to describe the method for triggering service execution provided in embodiments of this application. However, this embodiment of this application is not limited thereto. Any method obtained by replacing steps of any one of the foregoing methods, any method obtained by combining steps of the foregoing methods, and any method obtained by replacing a scenario of the foregoing methods fall within the protection scope of embodiments of this application.

For example, in the method 300, the description that the user A does not modify the first scenario message is only used as an example for description, and does not constitute a limitation on this embodiment of this application.

In some embodiments, the user A may also modify at least one of the trigger condition, the starting position, or the destination position in FIG. 4(b). The IM application on the mobile phone A modifies related information in response to the operation, and triggers the mobile phone A to display a modified card. Then, if the IM application on the mobile phone A detects an operation of tapping an "OK" button on the card displayed after the related information is modified, the IM application on the mobile phone A sends the second scenario message to the IM application on the mobile phone B via the first server, where the second scenario message is generated by modifying the first scenario message.

In this case, step 305 may be replaced with the following: The mobile phone A detects an operation of confirming sending of the second scenario message, and sends the first scenario message to a second client via the first server, where the second scenario message is generated by modifying the first scenario message.

Step 306 may be replaced with the following: The first server sends the second scenario message to the mobile phone B.

Step 307 may be replaced with the following: The mobile phone B displays, based on the second scenario message, a card corresponding to the second scenario message.

Step 308 may be replaced with the following: When determining that a second trigger condition is met, the mobile phone B invokes, based on the second scenario message, an execution carrier for a second service to execute the second service.

For example, in the method 500, the description that the user A modifies the first scenario message is only used as an example for description, and does not constitute a limitation on this embodiment of this application.

In some embodiments, the user A may also tap an "OK" button in FIG. 6(b) and the mobile phone A sends, in response to the operation, the first scenario message to the mobile phone A via the first server.

In this case, step 505 may be replaced with the following: The mobile phone A detects an operation of confirming sending of the first scenario message, and sends the first scenario message to the mobile phone A via the first server.

Step 506 may be replaced with the following: The first server sends the first scenario message to the mobile phone A.

Step 507 may be replaced with the following: The mobile phone A displays, based on the first scenario message, a card corresponding to the first scenario message.

Step 508 may be replaced with the following: When determining that the first trigger condition is met, the first server sends the first message to the mobile phone A, where the first message carries identification information of the first scenario message.

Step 509 may be replaced with the following: The mobile phone A invokes, based on the first message, an execution carrier for a second service to execute a first service.

It should be noted that the foregoing statement is also applicable to the method 700 and the method 90. For brevity, details are not described herein again.

An embodiment further provides a computer-readable storage medium. The computer-readable storage medium stores computer instructions. When the computer instructions are run on an electronic device, the electronic device is enabled to perform the steps of the related method, to implement the method for triggering service execution in the foregoing embodiments.

An embodiment further provides a computer program product. When the computer program product runs on a computer, the computer is enabled to perform the foregoing related steps, to implement the method for triggering service execution in the foregoing embodiments.

In addition, an embodiment of this application further provides an apparatus. The apparatus may be specifically a chip, an assembly, or a module. The apparatus may include a processor and a memory that are connected to each other. The memory is configured to store computer-executable instructions. When the apparatus runs, the processor may execute the computer-executable instructions stored in the memory, to enable the chip to perform the voice interaction method in the foregoing method embodiments.

The electronic device, the computer storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on the foregoing descriptions of the implementations, a person skilled in the art may understand that for the purpose of convenient and brief description, division into the foregoing functional modules is only used as an example for illustration. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is only an example. For example, the module or division into the units is only logical function division and may be other division in actual implementation. For example, a plurality of units or assemblies may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Therefore, the protection scope of this application shall be subject to the protection scope of the claims.

## Claims

1. A method for triggering service execution, comprising:
sending (501), by a first client, an instant messaging message to a server;
generating (502), by the server, a first scenario message based on the instant messaging message, wherein the first scenario message comprises description information corresponding to a first trigger condition, identification information of an execution carrier for a first service, and parameter information that needs to be invoked when the first service is executed;
sending (503), by the server, the first scenario message to the first client;
displaying (504), by the first client based on the first scenario message, a card corresponding to the first scenario message;
if the first client detects an operation of modifying the first scenario message, modifying, by the first client, the first scenario message to generate (505) a second scenario message, and sending the second scenario message to the server when detecting an operation of confirming sending of the second scenario message;
sending, by the server, the first scenario message (503) or the second scenario message (506) to a second client, wherein the second scenario message comprises description information corresponding to a second trigger condition, identification information of an execution carrier for a second service, and parameter information that needs to be invoked when the second service is executed; and
when determining that the first trigger condition is met, invoking, by the second client based on the first scenario message, the execution carrier for the first service to execute the first service; or
when determining (508) that the second trigger condition is met, invoking (509), by the second client based on the second scenario message, the execution carrier for the second service to execute the second service.

2. The method according to claim 1, wherein before the sending, by the server, the first scenario message to a second client, the method further comprises:
if the first client detects an operation of confirming sending of the first scenario message, sending, by the first client, the first scenario message to the server.

3. The method according to claim 1 or 2, wherein after the sending, by the server, the first scenario message to a second client, the method further comprises:
determining, by the server, whether the first trigger condition is met;
sending, by the server, a first message to the second client when determining that the first trigger condition is met, wherein the first message carries identification information of the first scenario message; and
determining, by the second client based on the first message, that the first trigger condition is met.

4. The method according to claim 1, after the sending, by the server, a second scenario message to a second client, the method further comprises:
determining, by the server, whether the second trigger condition is met;
sending, by the server, a second message to the second client when determining that the second trigger condition is met, wherein the second message carries identification information of the second scenario message; and
determining, by the second client based on the second message, that the second trigger condition is met.

5. The method according to any one of claims 1 to 4, wherein the instant messaging message is a text message or a voice message.

6. The method according to any one of claims 1 to 5, wherein the first client and the second client are a same client.

## Patentansprüche

1. Verfahren zum Auslösen einer Dienstausführung, umfassend:
Senden (501) einer Instant-Messaging-Nachricht durch einen ersten Client an einen Server;
Generieren (502) einer ersten Szenarionachricht durch den Server basierend auf der Instant-Messaging-Nachricht, wobei die erste Szenarionachricht Beschreibungsinformationen entsprechend einer ersten Auslösebedingung, Identifikationsinformationen eines Ausführungsträgers für einen ersten Dienst und Parameterinformationen umfasst, die aufgerufen werden müssen, wenn der erste Dienst ausgeführt wird;
Senden (503) der ersten Szenarionachricht durch den Server an den ersten Client;
Anzeigen (504) einer Karte entsprechend der ersten Szenarionachricht durch den ersten Client basierend auf der ersten Szenarionachricht;
sofern der erste Client eine Operation zum Ändern der ersten Szenarionachricht erkennt, Ändern der ersten Szenarionachricht durch den ersten Client, um eine zweite Szenarionachricht zu generieren (505), und Senden der zweiten Szenarionachricht an den Server, wenn eine Operation zum Bestätigen des Sendens der zweiten Szenarionachricht erkannt wird;
Senden der ersten Szenarionachricht (503) oder der zweiten Szenarionachricht (506) durch den Server an einen zweiten Client, wobei die zweite Szenarionachricht Beschreibungsinformationen entsprechend einer zweiten Auslösebedingung, Identifikationsinformationen eines Ausführungsträgers für einen zweiten Dienst und Parameterinformationen umfasst, die aufgerufen werden müssen, wenn der zweite Dienst ausgeführt wird; und
beim Bestimmen, dass die erste Auslösebedingung erfüllt ist, Aufrufen des Ausführungsträgers für den ersten Dienst durch den zweiten Client basierend auf der ersten Szenarionachricht, um den ersten Dienst auszuführen; oder
beim Bestimmen (508), dass die zweite Auslösebedingung erfüllt ist, Aufrufen (509) des Ausführungsträgers für den zweiten Dienst durch den zweiten Client basierend auf der zweiten Szenarionachricht, um den zweiten Dienst auszuführen.

2. Verfahren nach Anspruch 1, wobei das Verfahren vor dem Senden der ersten Szenarionachricht durch den Server an den zweiten Client ferner Folgendes umfasst:
sofern der erste Client eine Operation zum Bestätigen des Sendens der ersten Szenarionachricht erkennt, Senden der ersten Szenarionachricht durch den ersten Client an den Server.

3. Verfahren nach Anspruch 1 oder 2, wobei das Verfahren nach dem Senden der ersten Szenarionachricht durch den Server an den zweiten Client ferner Folgendes umfasst:
Bestimmen durch den Server, ob die erste Auslösebedingung erfüllt ist;
Senden einer ersten Nachricht durch den Server an den zweiten Client beim Bestimmen, dass die erste Auslösebedingung erfüllt ist, wobei die erste Nachricht Identifikationsinformationen der ersten Szenarionachricht enthält; und
Bestimmen durch den zweiten Client basierend auf der ersten Nachricht, dass die erste Auslösebedingung erfüllt ist.

4. Verfahren nach Anspruch 1, wobei das Verfahren nach dem Senden einer zweiten Szenarionachricht durch den Server an einen zweiten Client ferner Folgendes umfasst:
Bestimmen durch den Server, ob die zweite Auslösebedingung erfüllt ist;
Senden einer zweiten Nachricht durch den Server an den zweiten Client beim Bestimmen, dass die zweite Auslösebedingung erfüllt ist, wobei die zweite Nachricht Identifikationsinformationen der zweiten Szenarionachricht enthält; und
Bestimmen durch den zweiten Client basierend auf der zweiten Nachricht, dass die zweite Auslösebedingung erfüllt ist.

5. Verfahren nach einem der Ansprüche 1 bis 4, wobei die Instant-Messaging-Nachricht eine Textnachricht oder eine Sprachnachricht ist.

6. Verfahren nach einem der Ansprüche 1 bis 5, wobei der erste Client und der zweite Client derselbe Client sind.

## Revendications

1. Procédé de déclenchement d'exécution de service, comprenant :
l'envoi (501), par un premier client, d'un message de messagerie instantanée à un serveur ;
la génération (502), par le serveur, d'un premier message de scénario sur la base du message de messagerie instantanée, dans lequel le premier message de scénario comprend des informations de description correspondant à une première condition de déclenchement, des informations d'identification d'un support d'exécution pour un premier service, et des informations de paramètres qui doivent être invoquées lorsque le premier service est exécuté ;
l'envoi (503), par le serveur, du premier message de scénario au premier client ;
l'affichage (504), par le premier client sur la base du premier message de scénario, d'une carte correspondant au premier message de scénario ;
si le premier client détecte une opération de modification du premier message de scénario, la modification, par le premier client, du premier message de scénario pour générer (505) un second message de scénario, et l'envoi du second message de scénario au serveur lors de la détection d'une opération de confirmation d'envoi du second message de scénario ;
l'envoi, par le serveur, du premier message de scénario (503) ou du second message de scénario (506) à un second client, dans lequel le second message de scénario comprend des informations de description correspondant à une seconde condition de déclenchement, des informations d'identification d'un support d'exécution pour un second service, et des informations de paramètres qui doivent être invoquées lorsque le second service est exécuté ; et
lors de la détermination que la première condition de déclenchement est remplie, l'invocation, par le second client sur la base du premier message de scénario, du support d'exécution du premier service pour exécuter le premier service ; ou
lors de la détermination (508) que la seconde condition de déclenchement est remplie, l'invocation (509), par le second client sur la base du second message de scénario, du support d'exécution du second service pour exécuter le second service.

2. Procédé selon la revendication 1, dans lequel avant l'envoi, par le serveur, du premier message de scénario à un second client, le procédé comprend également :
si le premier client détecte une opération de confirmation d'envoi du premier message de scénario, l'envoi, par le premier client, du premier message de scénario au serveur.

3. Procédé selon la revendication 1 ou 2, dans lequel après l'envoi, par le serveur, du premier message de scénario à un second client, le procédé comprend également :
le fait de déterminer, par le serveur, si la première condition de déclenchement est remplie ;
l'envoi, par le serveur, d'un premier message au second client lors de la détermination que la première condition de déclenchement est remplie, dans lequel le premier message contient des informations d'identification du premier message de scénario ; et
la détermination, par le second client sur la base du premier message, que la première condition de déclenchement est remplie.

4. Procédé selon la revendication 1, après l'envoi, par le serveur, d'un second message de scénario à un second client, le procédé comprend également :
le fait de déterminer, par le serveur, si la seconde condition de déclenchement est remplie ;
l'envoi, par le serveur, d'un second message au second client lors de la détermination que la seconde condition de déclenchement est remplie, dans lequel le second message contient des informations d'identification du second message de scénario ; et
la détermination, par le second client sur la base du second message, que la seconde condition de déclenchement est remplie.

5. Procédé selon l'une quelconque des revendications 1 à 4, dans lequel le message de messagerie instantanée est un message texte ou un message vocal.

6. Procédé selon l'une quelconque des revendications 1 à 5, dans lequel le premier client et le second client sont un même client.
